# EUROPEAN PATENT APPLICATION

(11) **EP 4 664 997 A1**
(43) Date of publication of application: **17.12.2025**
(21) Application number: 24752858.1
(22) Date of filing: 05.02.2024
(51) Int. Cl.: H04W 36/36

(54) **CONDITIONAL HANDOVER METHODS, APPARATUS, TERMINAL AND NETWORK SIDE DEVICE**

(30) Priority: 08.02.2023 CN 202310102492
(71) Applicant: Vivo Mobile Communication Co., Ltd., Dongguan, Guangdong 523863 (CN)
(72) Inventor: PU, Wenjuan, Dongguan, Guangdong 523863 (CN); YANG, Xiaodong, Dongguan, Guangdong 523863 (CN); PAN, Xueming, Dongguan, Guangdong 523863 (CN); LIU, Xuanbing, Dongguan, Guangdong 523863 (CN)
(74) Representative: Shieldmark
(86) International application number: PCT/CN2024/076057
(87) International publication number: WO 2024/165003

(57) **Abstract**

This application discloses a conditional handover method and apparatus, a terminal, and a network side device, and belongs to the technical field of communication. The conditional handover method in embodiments of this application includes: receiving, by a terminal, control information, where the control information is used for triggering a conditional handover CHO-related operation; and initiating, by the terminal, the conditional handover CHO-related operation in response to the control information, where the initiating the CHO-related operation includes at least one of the following: initiating an execution operation of CHO; initiating an operation of changing or applying a CHO configuration; initiating a CHO evaluation operation in a case that the terminal is configured with the CHO and CHO evaluation is not started; or initiating a CHO-related measurement operation.

## Description

### CROSS-REFERENCE TO RELATED APPLICATIONS

This application claims priority to Chinese Patent Application No. 202310102492.4 filed in China on February 8, 2023, which is incorporated herein by reference in its entirety.

### TECHNICAL FIELD

This application belongs to the technical field of communication, and specifically relates to a conditional handover method and apparatus, a terminal, and a network side device.

### BACKGROUND

Conditional Handover (Conditional Handover, CHO) refers to handover performed by a terminal when a handover execution condition is satisfied. Main steps of a CHO process in a conventional technology include the following steps 0 to 7:
Step 0: A terminal reports a measurement report.
Step 1: A source base station determines to use CHO, that is, the source base station sends a handover request message to one or more candidate base stations, to request to configure a plurality of candidate cells.
Step 2: The source base station receives a handover request response message, where the handover request response message includes configuration information of one or more candidate cells.
Step 3: The source base station sends an RRC reconfiguration message to the terminal, where the RRC reconfiguration message includes a CHO configuration, and the CHO configuration includes configuration information of a candidate target cell and a corresponding execution condition.
Step 4: After receiving the CHO configuration, the terminal starts evaluation on an execution condition of each candidate target cell, and sends an RRC reconfiguration complete message to the source base station.
Step 5: If all measurement identifiers (measureIds) of a candidate target cell satisfy corresponding events (for example, one of an event A3 or an event A5), the terminal considers the candidate target cell as a triggered cell. The terminal automatically determines a selected cell in the triggered cells, and executes conditional handover on the cell. Specifically, the terminal initiates random access on the cell by using the RRC reconfiguration message of the cell, and sends the RRC reconfiguration complete message to the cell. After executing the handover, the terminal stops condition evaluation, and releases the CHO configuration.
Step 6: The target base station notifies the source base station that the handover of the terminal is succeeded.
Step 7: The source base station notifies other candidate base stations that the handover is canceled.

As can be known, in the conventional technology, a terminal usually immediately initiates an evaluation operation of the CHO after receiving a CHO configuration, and initiates a CHO execution operation when a CHO execution condition is satisfied. In addition, the terminal usually initiates CHO-related measurement only when signal quality of a source cell is lower than a quality threshold. It can be learned that an implementation process of the CHO in the conventional technology is not flexible enough, and therefore cannot be applicable to a plurality of different scenarios.

### SUMMARY

Embodiments of this application provide a conditional handover method and apparatus, a terminal, and a network side device, so that a CHO implementation process is more flexible, and may further be applicable to conditional handover in more scenarios.

According to a first aspect, a conditional handover method is provided, and is performed by a terminal. The method includes:
receiving, by a terminal, control information, where the control information is used for triggering a conditional handover CHO-related operation; and
initiating, by the terminal, the CHO-related operation in response to the control information, where
the initiating the CHO-related operation includes at least one of the following:
initiating an execution operation of CHO;
initiating an operation of changing or applying a CHO configuration;
initiating a CHO evaluation operation in a case that the terminal is configured with the CHO and CHO evaluation is not started; or
initiating a CHO-related measurement operation.

According to a second aspect, a conditional handover method is provided, and is performed by a network side device. The method includes:
sending, by a network side device, control information, where
the control information is used for triggering the terminal to initiate a conditional handover CHO-related operation;
the initiating a conditional handover CHO-related operation includes at least one of the following:
   initiating an execution operation of CHO;
   initiating an operation of changing or applying a CHO configuration;
   initiating a CHO evaluation operation in a case that the terminal is configured with the CHO and CHO evaluation is not started; or
   initiating a CHO-related measurement operation.

According to a third aspect, a conditional handover apparatus is provided, including:
a first receiving module, configured to receive control information, where the control information is used for triggering a conditional handover CHO-related operation;
a first processing module, configured to initiate the CHO-related operation in response to the control information, where
the initiating the CHO-related operation includes at least one of the following:
   initiating an execution operation of CHO;
   initiating an operation of changing or applying a CHO configuration;
   initiating a CHO evaluation operation in a case that the terminal is configured with the CHO and CHO evaluation is not started; or
   initiating a CHO-related measurement operation.

According to a fourth aspect, a conditional handover apparatus is provided, including:
a first sending module, configured to send control information, where the control information is used for triggering a terminal to initiate a conditional handover CHO-related operation, where
the initiating a conditional handover CHO-related operation includes at least one of the following:
   initiating an execution operation of CHO;
   initiating an operation of changing or applying a CHO configuration;
   initiating a CHO evaluation operation in a case that the terminal is configured with the CHO and CHO evaluation is not started; or
   initiating a CHO-related measurement operation.

According to a fifth aspect, a terminal is provided. The terminal includes a processor and a memory. The memory stores a program or instructions executable on the processor. The program or instructions, when executed by the processor, implement the steps of the method according to the first aspect.

According to a sixth aspect, a terminal is provided, including a processor and a communication interface. The communication interface is configured to receive control information, where the control information is used for triggering a conditional handover CHO-related operation. The processor is configured to initiate a CHO-related operation in response to the control information, where
the initiating the CHO-related operation includes at least one of the following:
initiating an execution operation of CHO;
initiating an operation of changing or applying a CHO configuration;
initiating a CHO evaluation operation in a case that the terminal is configured with the CHO and CHO evaluation is not started; or
initiating a CHO-related measurement operation.

According to a seventh aspect, a network side device is provided. The network side device includes a processor and a memory. The memory stores a program or instructions executable on the processor. The program or the instructions implement steps of the method according to the second aspect when executed by the processor.

According to an eighth aspect, a network side device is provided, including a processor and a communication interface. The communication interface is configured to send control information, where
the control information is used for triggering the terminal to initiate a conditional handover CHO-related operation;
the initiating a conditional handover CHO-related operation includes at least one of the following:
   initiating an execution operation of CHO;
   initiating an operation of changing or applying a CHO configuration;
   initiating a CHO evaluation operation in a case that the terminal is configured with the CHO and CHO evaluation is not started; or
   initiating a CHO-related measurement operation.

According to a ninth aspect, a readable storage medium is provided. The readable storage medium stores a program or instructions. The program or instructions, when executed by a processor, implement steps of the method according to the first aspect, or implement steps of the method according to the second aspect.

According to a tenth aspect, a wireless communication system is provided, including a terminal and a network side device. The terminal may be configured to perform steps of the method according to the first aspect, and the network side device may be configured to perform steps of the method according to the second aspect.

According to an eleventh aspect, a chip is provided. The chip includes a processor and a communication interface. The communication interface is coupled to the processor. The processor is configured to run a program or instructions to implement the method according to the first aspect, or implement the method according to the second aspect.

According to a twelfth aspect, a computer program/program product is provided. The computer program/program product is stored in a storage medium, and the computer program/program product is executed by at least one processor to implement steps of the method according to the first aspect or the second aspect.

In this embodiment of this application, the terminal can receive the control information, to initiate the CHO-related operation in response to the control information. The control information is used for triggering the CHO-related operation. Herein, the initiating the CHO-related operation includes at least one of the following: initiating an execution operation of CHO, initiating an operation of changing or applying a CHO configuration, initiating a CHO evaluation operation in a case that the terminal is configured with the CHO and the CHO evaluation is not started, or initiating a CHO-related measurement operation. As can be known, in this embodiment of this application, after receiving the control information, the terminal may initiate at least one of initiating the execution operation of the CHO, initiating the operation of changing or applying the CHO configuration, initiating the CHO evaluation operation in a case that the terminal is configured with the CHO and the CHO evaluation is not started, or initiating the CHO-related measurement operation. It can be learned that, in this embodiment of this application, the terminal may initiate more CHO-related operations based on a received trigger message, so that an implementation process of the CHO is more flexible, and may further be applicable to conditional handover in more scenarios.

### BRIEF DESCRIPTION OF THE DRAWINGS

FIG. 1 is a block diagram of a wireless communication system to which an embodiment of this application is applicable.
FIG. 2 is a flowchart of a conditional handover method according to an embodiment of this application;
FIG. 3 is a flowchart of another conditional handover method according to an embodiment of this application;
FIG. 4 is a block diagram of a conditional handover apparatus according to an embodiment of this application;
FIG. 5 is a block diagram of another conditional handover apparatus according to an embodiment of this application;
FIG. 6 is a block diagram of a structure of a communication device according to an embodiment of this application;
FIG. 7 is a block structural diagram of a terminal according to an embodiment of this application; and
FIG. 8 is a block diagram of a structure of a network side device according to an embodiment of this application.

### DETAILED DESCRIPTION

Technical solutions in embodiments of this application will be clearly described in the following with reference to accompanying drawings in the embodiments of this application. Apparently, the described embodiments are merely some rather than all of the embodiments of this application. Based on the embodiments of this application, all other embodiments obtained by those of ordinary skill in the art fall within the protection scope of this application.

Terms "first", "second", and the like in this application are used to distinguish similar objects, but are not used to describe a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or more. In addition, "or" in this application represents at least one of connected objects. For example, "A or B" covers three solutions, that is, solution 1: including A and excluding B; solution 2: including B and excluding A; and solution 3: including both A and B. The character "/" in this specification generally indicates an "or" relationship between the associated objects.

Term "indication" in this application may be a direct indication (or an explicit indication), or may be an indirect indication (or an implicit indication). The direct indication may be understood as that a sending party explicitly notifies a receiving party of content such as specific information, an operation that needs to be performed, or a request result in a sent indication. The indirect indication may be understood as that the receiving party determines corresponding information according to an indication sent by the sending party, or performs determining and determines an operation that needs to be performed or a request result according to a determination result.

It is worth noting that technologies described in this application are not limited to a long term evolution (Long Term Evolution, LTE)/evolution (LTE-Advanced, LTE-A) system of the LTE, and may alternatively be used for other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, and a single-carrier frequency division multiple access (Single-carrier Frequency Division Multiple Access, SC-FDMA), or other systems. Terms "system" and "network" in the embodiments of this application are often used interchangeably. The described technology can not only be used in the systems and radio technologies mentioned above, but also be used in other systems and radio technologies. The following description describes a new radio (New Radio, NR) system for a purpose of giving examples, and the term NR is used in most of the following descriptions. However, these technologies can alternatively be applied to systems other than the NR system, for example, a 6th generation (6th Generation, 6G) communication system.

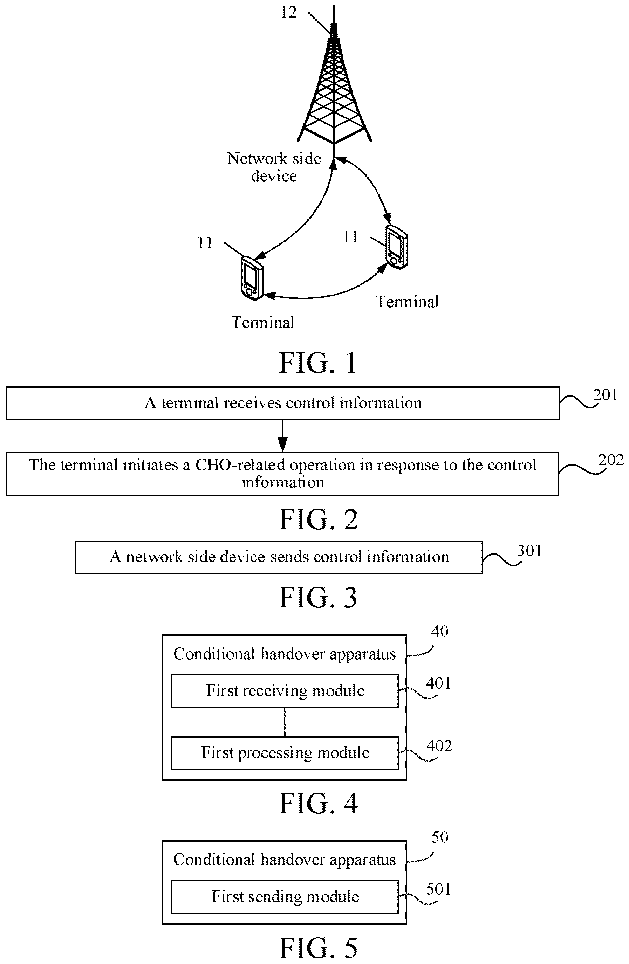

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle, a vehicle user equipment (Vehicle User Equipment, VUE), a ship-borne equipment, a pedestrian user equipment (Pedestrian User Equipment, PUE), a smart home appliance (a home device with a wireless communication function, such as a refrigerator, a television, a washing machine, or furniture), a game console, a personal computer (Personal Computer, PC), a teller machine, or a selfservice machine. The wearable device includes a smart watch, a smart bracelet, a smart headset, smart glasses, smart jewelry (a smart wristlet, a smart chain bracelet, a smart ring, a smart necklace, a smart ankle bangle, a smart ankle chain, and the like), a smart wristband, smart clothing, and the like. The vehicle user equipment may alternatively be referred to as an in-vehicle terminal, an in-vehicle controller, an in-vehicle module, an in-vehicle component, an in-vehicle chip, an in-vehicle unit, or the like. It is to be noted that a specific type of the terminal 11 is not limited in the embodiments of this application.

The network side device 12 may include an access network device or a core network device. The access network device may alternatively be referred to as, a radio access network (Radio Access Network, RAN) device, a radio access network function, or a radio access network unit. The access network device may include a base station, a wireless local area network (Wireless Local Area Network, WLAN) Access Point (AS), a Wireless Fidelity (WiFi) node, or the like. The base station may be referred to as a node B, an evolved node B (Evolved Node B, eNB), a next generation node B (a next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP) or some other suitable terms in the field as long as the same technical effect is achieved, and the base station is not limited to a specific technical word. It is to be noted that in the embodiments of this application, introduction is made by only taking the base station in the NR system as an example, and a specific type of the base station is not limited.

For ease of understanding the conditional handover method in this embodiment of this application, the following related technologies are described.

### 1. CHO configuration

The CHO configuration includes configuration information of a plurality of candidate target cells. Specifically, a network side configures an execution condition and an RRC reconfiguration message for each candidate target cell, which are identified by a CHO id. The execution condition consists of 1 or 2 measureIds. The measureId is associated with a measureId in a radio resource management (Radio Resource Management, RRM) measurement configuration (measureConfig), that is, the UE may obtain a conditional trigger event (Cond trigger event) (which may be one of events A3, A5, T1, and D1) corresponding to the measureId according to the measureId and the measureConfig. Currently, the CHO does not support configuration of measurement event A4.

Event A3: It indicates that quality of a neighbor cell is one offset higher than quality of a serving cell.

Event A4: It indicates that quality of a neighbor cell is higher than a threshold.

Event A5: It indicates that quality of a serving cell is lower than a threshold and quality of a neighbor cell is higher than a threshold.

Event T1: It indicates that time measured by a terminal exceeds a moment.

Event D1: It indicates that a distance between a position of the terminal and a reference point is within a specified interval.

In addition, a conditional event may be understood as an event configured in a condition configuration (for example, an event A3 configured in the CHO configuration is a conditional event A3).

### 2. R18 network energy saving

Most of power consumption of an NR network comes from a base station, and 90% of power consumption of an NR base station comes from an active antenna unit (Active Antenna Unit, AAU). Due to reasons such as a higher frequency band, a wider bandwidth, and more transceiver units (TRX), currently, power consumption of a single NR base station is three to four times higher than that of LTE. In addition, in terms of operating expense (Operating Expense, OPEX), electricity charge of a base stations accounts for nearly 20% of entire network operating costs. For some operators, electricity charge accounts for more than half of a total profit. Therefore, network energy saving of NR has become more critical for achieving great success of 5G. According to actual load situation, the base station may implement energy saving measures of different degrees, for example, disabling the base station, disabling a carrier/cell, disabling a channel, disabling a synchronization signal block (Synchronization Signal Block, SSB)/beam, disabling an antenna/panel, cell discontinuous reception (cell DTX) and/or discontinuous transmission (cell DRX), and adaptability of CSI-RS measurement and/or reporting. For example, in a case that a cell has a low load or zero load, the base station may choose to disable the cell.

### 3. Connected RRM measurement:

Neighboring cell measurement in connected state is not performed all the time, and is started only when a reference signal received power (Reference Signal Received Power, RSRP) of a serving cell is lower than a threshold.

A conditional handover method provided in embodiments of this application is described in detail below through some embodiments and application scenarios with reference to accompanying drawings.

According to a first aspect, FIG. 2 is a flowchart of a conditional handover method according to an embodiment of this application. The method may include the following steps 201 to 202.

Step 201: A terminal receives control information.

The control information is used for triggering a conditional handover CHO-related operation.

In addition, the control information may be sent to at least one terminal by a network side device before entering an energy saving state. In this way, the terminal may perform the CHO-related operation in response to the control information before the network side device enters the energy saving state. In this way, in this case, the control information may be used for triggering CHO in a network energy saving scenario.

Optionally, the control information includes at least one of the following items A-1 to A-7:
item A-1: first indication information, where the first indication information is used for instructing at least one of: the network side device to enter an energy saving state or an energy saving mode to be entered by the network side device;
item A-2: a cell bar, where the cell bar is used for instructing a cell to prohibit at least some terminals (for example, terminals in an IDLE (IDLE) state or an INACTIVE state) from camping;
item A-3: indication information instructing the terminal to initiate an execution operation of the CHO;
item A-4: second indication information, where the second indication information is used for indicating related information of a CHO configuration;
item A-5: third indication information, where the third indication information is used for instructing the terminal to perform CHO evaluation;
item A-6: fourth indication information, where the fourth indication information is used for instructing the terminal to perform CHO-related measurement; or
item A-7: time configuration information, where the time configuration information is used for indicating a time when the terminal to perform the CHO evaluation.

In the foregoing item A-1, an implementation manner is that the network side device may use two bits to indicate one of four energy saving modes to be entered by a network currently. The four energy saving modes are respectively: cell off, discontinuous transmission (cell DTX), channel state information adaptation (CSI adaptation), and cell normal.

In the foregoing item A-2, the cell bar is used for prohibiting terminals in IDLE and INACTIVE states from camping. If a terminal in a connected state receives the cell bar, the terminal may be triggered to initiate a CHO-related operation. Further, a UE receives the cell bar in a SIB1. If a network side carries cell bars for different network energy saving modes, the UE may further determine, based on whether the UE supports a corresponding energy saving mode, whether to initiate a CHO-related operation. For example, if the SIB1 carries cell bar information corresponding to cell DTX and indicates "barred", and the UE does not support a cell DTX mode, the UE initiates the CHO-related operation. If the UE supports a Cell DTX mode, the UE skips initiating the CHO-related operation, or whether the UE initiates the CHO-related operation is determined by the UE.

In the foregoing item A-3, the "initiating, by the terminal, an execution operation of the CHO" refers to an operation in which the terminal selects a candidate target cell and performs handover on the candidate target cell, is alternatively referred to as a CHO execution operation, and belongs to a sub-step in a process in which the terminal performs the CRO.

The initiating the CHO-related operation may include at least one of the following items B-1 to B-4:
item B-1: initiating an execution operation of the CHO;
item B-2: initiating an operation of changing or applying a CHO configuration;
item B-3: initiating a CHO evaluation operation in a case that the terminal is configured with the CHO and CHO evaluation is not started; or
item B-4: initiating a CHO-related measurement operation.

In a case that the control information includes one or more of the foregoing items A-1 to A-6, operation or operations in B-1 to B-4 that the terminal initiates will be described in detail subsequently.

Step 202: The terminal initiates a CHO-related operation in response to the control information.

It can be learned from the foregoing steps 201 to 202 that, in embodiments of this application, the terminal can receive the control information, to initiate the CHO-related operation in response to the control information. The control information is used for triggering the CHO-related operation. Herein, the initiating the CHO-related operation includes at least one of the following: initiating an execution operation of CHO, initiating an operation of changing or applying a CHO configuration, initiating a CHO evaluation operation in a case that the terminal is configured with the CHO and the CHO evaluation is not started, or initiating a CHO-related measurement operation. As can be known, in this embodiment of this application, after receiving the control information, the terminal may initiate at least one of initiating the execution operation of the CHO, initiating the operation of changing or applying the CHO configuration, initiating the CHO evaluation operation in a case that the terminal is configured with the CHO and the CHO evaluation is not started, or initiating the CHO-related measurement operation. It can be learned that, in this embodiment of this application, the terminal may initiate more CHO-related operations based on a received trigger message, so that an implementation process of the CHO is more flexible, and may further be applicable to conditional handover in more scenarios.

In addition, in a network energy saving scenario, a source cell may configure the CHO for the terminal in advance, and when the source cell is about to enter an energy saving state, all terminals are handed over to the candidate target cell, so that the source cell may be placed in the energy saving state. However, by using the conventional technology, after configuring the CHO, a network side cannot control, according to the energy saving state and a paging occasion of the source cell, when the terminal initiates measurement, evaluation, and execution operation of the CRO. Consequently, the source cell cannot enter the energy saving state because the terminal is not handed over for a long time, or the terminal performs unnecessary measurement to consume power in a case that the network does not enter the energy saving state.

However, in this embodiment of this application, before the source cell enters the energy saving state, the CHO may be configured for the terminal in a connected state in advance. When the source cell determines to enter the energy saving state, the foregoing control information may be sent to trigger a plurality of terminals to perform conditional handover. In this way, after the terminals are all handed over to the candidate target cell, the source cell can enter the energy saving state, and the terminal does not need to perform unnecessary measurement to consume power in a case that the network does not enter the energy saving state. It can be learned that, in this embodiment of this application, the plurality of terminals can uniformly and rapidly complete conditional handover, so as to enable the source cell to enter the energy saving state as soon as possible. That is, in this embodiment of this application, conditional handover in a network energy saving scenario may be implemented.

Specific cases in which the terminal initiates the CHO-related operation in step 202 are specifically described below, as described in the following case 1 to case 4:
Case 1: Optionally: the initiating, by the terminal, the CHO-related operation includes:
in a case that the control information includes at least one of first indication information, a cell bar, or indication information instructing the terminal to initiate the execution operation of the CHO, initiating, by the terminal, the execution operation of the CHO, where
the first indication information is used for instructing at least one of: a network side device to enter an energy saving state or an energy saving mode to be entered by the network side device; and
the cell bar is used for instructing a cell to prohibit at least some terminals from camping.

As can be known, in a case that the terminal receives at least one of the first indication information, the cell bar, or the indication information instructing the terminal to initiate the execution operation of the CHO, the terminal may be triggered to initiate the execution operation of the CRO. For example, when a network side device determines to enter the energy saving state, the foregoing control information may be sent, and at least one of the following is indicated in the control information: the terminal to initiate the execution operation of the CHO, the terminal enters a network energy saving state, an energy saving mode to be entered by the terminal, or the cell bar, so that the terminal which receives the control information may initiates the execution operation of the CHO.

It may be understood that the control information includes the first indication information "used for instructing at least one of: the network side device to enter an energy saving state or an energy saving mode to be entered by the network side device", which is equivalent to "the control information indicates at least one of: the network side device to enter an energy saving state or an energy saving mode to be entered by the network side device".

"The control information includes the cell bar" is equivalent to "the cell bar is used as the control information".

"The control information includes indication information instructing the terminal to initiate the execution operation of the CHO" is equivalent to "the control information instructs the terminal to initiate the execution operation of the CHO".

Case 1 may be applicable to the following target scenario:
a source cell configures a default candidate target cell for a low-speed or static UE, and coverage of the candidate target cell includes coverage of the source cell. Because signal quality of the terminal in the source cell is still relatively high, the terminal may not start measurement on the candidate target cell for a relatively long time. If the source cell is about to enter the energy saving mode, the control information may be sent to trigger the UE to hand over to the default candidate target cell (that is, initiate a CHO execution operation). In this case, quality of the candidate target cell does not need to be evaluated.

In addition, based on case 1, optionally, before the terminal receives the control information, the method further includes:
saving, by the terminal after receiving the CHO configuration, the CHO configuration, and initiating the CHO evaluation operation corresponding to the CHO configuration.

As can be known, in another scenario (for example, the network side considers mobility of the terminal) other than the foregoing target scenario, after receiving the CHO configuration, the terminal may save the CHO configuration, and start, by default, CHO evaluation based on the CHO configuration. Before the terminal receives the control information, if it is evaluated that a CHO execution condition is satisfied, the terminal initiates the execution operation of the CHO. If the terminal receives the control information, the terminal initiates the execution operation of the CHO.

For case 1, after the UE initiates the CHO execution operation, the UE needs to select a candidate target cell and perform handover on the cell. The UE may select the candidate target cell in one of the following manners:
manner 1: a candidate target cell is selected depending on UE implementations, for example, different terminals may have different implementation manners;
manner 2: a candidate target cell is randomly selected, and whether a CHO execution condition is satisfied does not need to be determined;
manner 3: any one candidate target cell satisfying a given quality threshold is selected;
manner 4: a candidate target cell having the strongest quality is selected;
manner 5: a candidate target cell designated by a network side is selected; or
manner 6: a candidate target cell configured with a dedicated RACH resource or a cell wakeup signal is selected.

Case 2: Optionally, the initiating, by the terminal, the CHO-related operation includes:
in a case that the control information includes at least one of first indication information, a cell bar, or second indication information, initiating, by the terminal, the operation of changing or applying the CHO configuration, where
the first indication information is used for instructing at least one of: a network side device to enter an energy saving state or an energy saving mode to be entered by the network side device;
the cell bar is used for instructing a cell to prohibit at least some terminals from camping; and
the second indication information is used for indicating related information of the CHO configuration.

Herein, optionally, after the terminal initiates an operation of changing or applying a CHO configuration, the terminal may initiate or re-initiate a CHO evaluation operation.

As can be known, in a case that the terminal receives at least one of the first indication information, the cell bar, or the second indication information, the terminal may be triggered to perform a change or application of the CHO configuration. For example, when the network side device determines to enter the energy saving state, the foregoing control information may be sent, and the control information carries at least one of the first indication information, the cell bar information, or the second indication information, so that the terminal which receives the control information may perform a change or application of the CHO configuration.

It may be understood that the control information includes the second indication information "used for indicating related information of a CHO configuration", which is equivalent to "the control information indicates related information of a CHO configuration".

In case 2, optionally, before the terminal receives the control information, the method further includes:
saving, by the terminal after receiving the CHO configuration, the CHO configuration, and initiating the CHO evaluation operation corresponding to the CHO configuration.

As can be known, in case 2, after receiving the CHO configuration, the terminal may save the CHO configuration, and start, by default, CHO evaluation based on the CHO configuration.

In addition, optionally, the second indication information includes at least one of the following item C-1 to item C-3:
item C-1: a threshold offset of a CHO execution condition;
item C-2: fifth indication information, where the fifth indication information is used for instructing the terminal to adjust a threshold of the CHO execution condition according to a predefined threshold offset of the CHO execution condition; or
item C-3: sixth indication information, where the sixth indication information is used for indicating the terminal to use a specific CHO execution condition.

Herein, it is to be noted that, in item C-2, the threshold offset of the predefined CHO execution condition may be agreed on by a protocol, or may be configured by the network side device for the terminal in the CHO configuration in advance.

Optionally, the initiating, by the terminal, an operation of changing or applying a CHO configuration includes at least one of the following items D-1 and D-2:
item D-1: in a case that the second indication information includes at least one of fifth indication information or a threshold offset of a CHO execution condition, the terminal changes a threshold of the CHO execution condition according to at least one of the fifth indication information or the threshold offset of the CHO execution condition; or
item D-2: in a case that the second indication information includes sixth indication information, the terminal performs a CHO evaluation operation by using a specific particular CHO execution condition.

It can be known from the foregoing item D-1 that, if the control information received by the terminal instructs the terminal to adjust the threshold of the CHO execution condition according to the predefined threshold offset of the CHO execution condition, the terminal may adjust the threshold of the CHO execution condition according to the predefined threshold offset of the CHO execution condition, so as to perform CHO evaluation based on the adjusted threshold, and initiate the execution operation of the CHO when it is evaluated that a corresponding execution condition is satisfied.

Or, if the control information received by the terminal indicates the threshold offset of the CHO execution condition, the terminal may change the threshold of the CHO execution condition by using the threshold offset of the CHO execution condition indicated in the control information, so as to perform CHO evaluation based on the adjusted threshold, and initiate the execution operation of the CHO when it is evaluated that a corresponding execution condition is satisfied.

It can be known from the foregoing item D-2 that, if the control information received by the terminal instructs the terminal to use the specific CHO execution condition, the terminal may perform CHO evaluation by using the specific CHO execution condition. That is, the terminal may change the execution condition of the CHO after receiving the control information, so as to initiate the execution operation of the CHO when it is evaluated that a corresponding execution condition is satisfied.

In case 2, optionally, the method further includes:
in a case that a candidate target cell satisfying the CHO execution condition is not found within a preset time after the terminal receives the control information, sending, by the terminal, notification information to the network side device, where the notification information is used for indicating that the candidate target cell satisfying the CHO execution condition is not found within the preset time.

The foregoing preset time may be a time indicated by time configuration information. The time configuration information may be pre-configured (for example, configured before the terminal receives the control information), or may be configured by using the control information (that is, the time configuration information is carried in the control information), or may be agreed on by a protocol.

For example, in the foregoing item D-2, if the control information received by the terminal instructs the terminal to use the specific CHO execution condition, and carries a piece of time configuration information (or the time configuration information is configured in advance), the terminal may evaluate the specific CHO execution condition for duration indicated by the time configuration information. If it is evaluated that the specific CHO execution condition is not satisfied, it indicates that the candidate target cell satisfying the specific CHO execution condition cannot be found within the time indicated by the time configuration information, so that the network side device can be notified of the situation, and the network side device makes a proper decision, for example, does not enter an energy saving state.

Optionally, the notification information includes at least one of a radio resource control RRC message, a media access control control element MAC CE message, or uplink control information UCI. That is, "the terminal does not find the candidate target cell satisfying the CHO execution condition within the time indicated by the foregoing time configuration information" may be indicated in at least one of the RRC message, the MAC message, or the UCI.

Optionally, an uplink resource of the notification information is preconfigured, or the uplink resource of the notification information is a cell common resource.

Optionally, the foregoing notification message may be only uplink signaling, for example, sending a random access preamble or a channel state information report (CSI).

Case 3: Optionally, the initiating, by the terminal, a CHO-related operation further includes:
in a case that the control information includes at least one of first indication information, a cell bar, or third indication information, and the terminal is configured with the CHO and CHO evaluation is not started, initiating, by the terminal, the CHO evaluation operation corresponding to the CHO configuration configured for the terminal, where
the first indication information is used for instructing at least one of: a network side device to enter an energy saving state or an energy saving mode to be entered by the network side device;
the cell bar is used for instructing a cell to prohibit at least some terminals from camping; and
the third indication information is used for instructing the terminal to initiate the CHO evaluation operation.

In addition, the control information includes third indication information "used for instructing the terminal to initiate the CHO evaluation operation", which is equivalent to "the control information instructs the terminal to initiate the CHO evaluation operation".

Optionally, before the terminal receives the control information, the method further includes:
saving, by the terminal after receiving the CHO configuration, the CHO configuration, and skipping starting the CHO evaluation operation corresponding to the CHO configuration.

As can be known, in case 3, after receiving the CHO configuration, the terminal may save the CHO configuration, and skip starting, by default, CHO evaluation based on the CHO configuration, so as to start an evaluation operation of the CHO configuration after receiving at least one of the first indication information, the cell bar, or the third indication information.

For example, the network side device may configure CHO for the terminal before entering the energy saving state, and the terminal saves the CHO configuration. Then, when the network side device determines to enter the energy saving state, the foregoing control information may be sent, and at least one of the first indication information, the cell bar, or the third indication information is carried in the control information, so that the terminal which receives the control information may start CHO evaluation corresponding to the CHO configuration saved by the terminal.

Further optionally, the method further includes the following steps:
in a case that the CHO configuration received by the terminal includes an execution condition based on an event A4, skipping starting, by the terminal, the CHO evaluation operation on the execution condition based on the event A4;
   or,
after the terminal receives the CHO configuration, skipping starting, by the terminal according to an indication of the network side device, the CHO evaluation operation corresponding to the received CHO configuration.

As can be known, in a case that the CHO configuration configured for the terminal includes an execution condition based on the event A4, the terminal receives and saves the CHO configuration, but skips starting the CHO evaluation operation on the execution condition based on the event A4, but starts the CHO evaluation operation of the execution condition based on the event A4 after receiving at least one of the first indication information, the cell bar, or the third indication information; or, the terminal may skip starting the CHO evaluation operation according to an indication of the network side device after receiving the CHO configuration, but starts the corresponding CHO evaluation operation after receiving the at least one of the first indication information, the cell bar, or the third indication information.

In addition, in case 3, optionally, the method further includes:
in a case that a candidate target cell satisfying the CHO execution condition is not found within a preset time after the terminal receives the control information, sending, by the terminal, notification information to the network side device, where the notification information is used for indicating that the candidate target cell satisfying the CHO execution condition is not found within the preset time.

The foregoing preset time may be a time indicated by time configuration information. The time configuration information may be pre-configured (for example, configured before the terminal receives the control information), or may be configured by using the control information (that is, the time configuration information is carried in the control information), or may be agreed on by a protocol.

As can be known, in case 3, after receiving the CHO configuration, the terminal may save the CHO configuration, and skip starting, by default, CHO evaluation based on the CHO configuration, so as to start evaluation based on the saved CHO configuration after receiving at least one of the first indication information, the cell bar, the third indication information. If a candidate target cell satisfying a CHO execution condition in the saved CHO configuration cannot be found within the preset time, the network side device may be informed of the case, so that the network side device determines properly, for example, does not enter an energy saving state.

Optionally, the notification information includes at least one of a radio resource control RRC message, a media access control control element MAC CE message, or uplink control information UCI. That is, "the terminal does not find the candidate target cell satisfying the CHO execution condition within the time indicated by the foregoing time configuration information" may be indicated in at least one of the RRC message, the MAC message, or the UCI.

Optionally, an uplink resource of the notification information is preconfigured, or the uplink resource of the notification information is a cell common resource.

Optionally, the foregoing notification message may be only uplink signaling, for example, sending a random access preamble or a channel state information report (CSI).

Case 4: Optionally, the initiating, by the terminal, a CHO-related operation further includes:
in a case that the control information includes at least one of first indication information, a cell bar, or fourth indication information, the terminal initiates the CHO-related measurement operation, where
the first indication information is used for instructing at least one of: a network side device to enter an energy saving state or an energy saving mode to be entered by the network side device;
the cell bar is used for instructing a cell to prohibit at least some terminals from camping; and
the fourth indication information is used for instructing the terminal to initiate the CHO-related measurement operation.

As can be known, in a case that the terminal receives at least one of the first indication information, the cell bar, or the fourth indication information, the terminal may be triggered to perform CHO-related measurement. In a conventional technology, after receiving a CHO configuration, the terminal skips starting neighboring cell measurement because a measurement start threshold of a neighboring cell is not satisfied. However, in case 4, the network side device may trigger, by using at least one of the first indication information, the cell bar, or the fourth indication information, the terminal to perform CHO-related measurement, so as to evaluate a CHO execution condition based on a measurement result, and initiate the execution operation of the CHO when the corresponding execution condition is satisfied.

It may be understood that the control information includes the fourth indication information "used for instructing the terminal to perform the CHO-related measurement", which is equivalent to "the control information instructs the terminal to perform the CHO-related measurement".

Herein, the "CHO-related measurement" includes: measurement on a measurement object associated with a measID in a CHO configuration.

In addition, this embodiment of this application may further include at least one of the following case 5 and case 6:
Case 5: Optionally, the method further includes:
in a case that the terminal does not support the energy saving mode to be entered by the network side device, initiating, by the terminal, the CHO-related operation.

For example, if the terminal receives the foregoing control information, and the control information indicates an energy saving mode to be entered by the network side device, but the terminal does not support the energy saving mode, the terminal may initiate the CHO-related operation.

Optionally, the method further includes:
in a case that the terminal supports the energy saving mode to be entered by the network side device, skipping initiating, by the terminal, the CHO-related operation or whether to initiate the CHO-related operation is determined by the terminal.

For example, the terminal receives the foregoing control information, the control information indicates that the energy saving mode to be entered by the network side device is cell DTX, and the terminal supports the cell DTX, the terminal may skip initiating the CHO-related operation, or whether to initiate the CHO-related operation may be determined by a UE.

Case 6: Optionally, the method further includes:
in a case that a radio link failure RLF occurs before the terminal receives the control information, performing, by the terminal, a first operation or a second operation, where
the first operation includes initiating the CHO-related operation; and
the second operation includes performing RRC re-establishment, and performing, in a case that a first cell selected during the RRC reestablishment is the candidate target cell in the CHO configuration of the terminal, handover based on the first cell; and sending an RRC re-establishment request on the first cell in a case that the first cell is not the candidate target cell in the CHO configuration of the terminal.

In addition, optionally, the foregoing first operation may further include: performing RRC re-establishment in a case in which CHO fails.

As can be known, before the terminal receives the foregoing control information, if RLF occurs, the terminal may initiate the CHO-related operation (optionally, in a case that the CHO fails, RRC re-establishment is performed); or, the RRC re-establishment may be performed, and in a case that the first cell selected during the RRC re-establishment is a candidate target cell in the CHO configuration of the terminal, handover is performed based on the first cell; and in a case that the first cell is not the candidate target cell in the CHO configuration of the terminal, an RRC re-establishment request is sent on the first cell.

In case 6, optionally, the performing, by the terminal, a first operation or a second operation includes:
in a case that the network side device configures that the terminal performs the first operation when the RLF is detected, performing, by the terminal, the first operation; or,
in a case that the network side device configures that the terminal performs the second operation when the RLF is detected, performing, by the terminal, the second operation.

Another implementation manner is that the terminal performs the foregoing first operation when the RLF is detected, which may be configured by the network side device. If the network side device does not configure, the terminal initiates the RRC re-establishment by default, or performs the foregoing second operation by default.

Case 7: Optionally, the control information further includes a cell list. The method further includes:
in a case that a CHO failure occurs on the terminal, selecting, by the terminal, a second cell from the cell list, and sending an RRC re-establishment request on the second cell.

As can be known, the foregoing control information may further be configured with a list of cells available for evacuation, and the list is saved by the terminal. In this way, after the CHO fails, the terminal selects a cell from the list of cells available for evacuation, and then initiates re-establishment.

Optionally, the receiving, by the terminal, control information includes at least one of the following:
receiving, by the terminal, a system message (for example, a SIB1), where the system message carries the control information;
receiving, by the terminal, a short message, where the system message carries the control information;
receiving, by the terminal, a paging message, where the paging message carries the control information; or
receiving, by the terminal, group common downlink control information (Downlink Control Information, DCI), where the group common downlink control information carries the control information.

As can be known, in this embodiment of this application (for example, in any combination of case 1 to case 7 described above), the network side device may send the foregoing control information by using at least one of the system message, the short message, the paging message, or the group common DCI.

That is, at least one of the system message, the short message, the paging message, or the group common DCI may include at least one of the following items A-1 to A-7:
item A-1: first indication information, where the first indication information is used for instructing at least one of: the network side device to enter an energy saving state or an energy saving mode to be entered by the network side device;
item A-2: a cell bar, where the cell bar is used for instructing a cell to prohibit at least some terminals (for example, terminals in an IDLE (IDLE) state or an INACTIVE state) from camping;
item A-3: indication information instructing the terminal to initiate an execution operation of the CHO;
item A-4: second indication information, where the second indication information is used for indicating related information of a CHO configuration;
item A-5: third indication information, where the third indication information is used for instructing the terminal to perform CHO evaluation;
item A-6: fourth indication information, where the fourth indication information is used for instructing the terminal to perform CHO-related measurement; or
item A-7: time configuration information, where the time configuration information is used for indicating a time when the terminal to perform the CHO evaluation.

Optionally, a paging occasion when the terminal receives the system message is configured by a network side or agreed on by a protocol.

Optionally, the receiving, by the terminal, a system message includes at least one of the following items E-1 and E-2:
item E-1: in a case that a target condition is satisfied, receiving, by the terminal, broadcast system message; or
item E-2: in a case that the short message received by the terminal indicates target content, receiving, by the terminal, broadcast system message, where
the target condition includes at least one of the following items F-1 to F-4:
   item F-1: an activated bandwidth part BWP of the terminal is configured with a common search space of the system message;
   item F-2: an initial bandwidth part BWP of the terminal is configured with a common search space of the system message;
   item F-3: the terminal is configured with monitored and broadcast system message; or
   item F-4: the terminal receives the CHO configuration; and
   the target content includes at least one of the following items G-1 to G-3:
      item G-1: a system message changes;
      item G-2: a network energy saving-related system message changes; or
      item G-3: a CHO-related system message changes.

It can be known from the foregoing item E-1 that, in a case that at least one of the foregoing items F-1 to F-4, the terminal may obtain the control information by receiving the system message.

If it is stipulated that the network energy saving-related system message is sent by using SIB1, when the network energy saving-related system message indicated in the short message received by the UE changes, the UE needs to monitor the SIB1 to obtain the network energy saving-related system message. If the system message carries the foregoing control information, the terminal initiates a CHO-related operation.

It can be known from the foregoing item E-2 that, the terminal may first receive the short message, and obtain the foregoing control information by receiving the system message in a case that the received short message indicates at least one of the foregoing items G-1 to G-3.

Optionally, the receiving, by the terminal, the short message includes:
in a case that an activated BWP or an initial BWP of the terminal is configured with a paging common search space, receiving, by the terminal, the short message.

As can be known, the terminal may obtain the control information by receiving the short message in a case that the activated BWP or the initial BWP of the terminal is configured with the paging common search space.

Optionally, the receiving, by the terminal, the short message includes:
monitoring, by the terminal, the short message on a paging occasion configured or predefined by the network side device;
   or,
monitoring, by the terminal, the short message on a time window configured or predefined by the network side device.

As can be known, the terminal may monitor the short message on a paging occasion (or a time window) configured or predefined on a network side.

The terminal may further monitor according to a current short message monitoring paging occasion. For example, the terminal monitors the short message at any PO position at least once within a modification periodicity.

Optionally, the receiving, by the terminal, the paging message includes:
in a case that the short message received by the terminal instructs the terminal in a connected state to monitor the paging message, receiving, by the terminal, the paging message.

As can be known, the terminal may first receive the short message. If the short message instructs the terminal in a connected state to monitor the paging message, the terminal monitors the paging to obtain the control information.

Optionally, the method further includes:
after receiving the CHO configuration, the terminal starts CHO-related measurement.

As can be known, after receiving the CHO configuration, the terminal may further start the CHO-related measurement by default.

According to a second aspect, embodiments of this application further provide a conditional handover method. As shown in FIG. 3, the method may include the following step 301:
Step 301: A network side device sends control information.

The control information is used for triggering the terminal to initiate a conditional handover CHO-related operation.

In addition, the control information may be sent to at least one terminal by a network side device before entering an energy saving state. In this way, the terminal may perform the CHO-related operation in response to the control information before the network side device enters the energy saving state. In this way, in this case, the control information may be used for triggering CHO in a network energy saving scenario.

Optionally, the control information includes at least one of the following items A-1 to A-7:
item A-1: first indication information, where the first indication information is used for instructing at least one of: the network side device to enter an energy saving state or an energy saving mode to be entered by the network side device;
item A-2: a cell bar, where the cell bar is used for instructing a cell to prohibit at least some terminals (for example, terminals in an IDLE (IDLE) state or an INACTIVE state) from camping;
item A-3: indication information instructing the terminal to initiate an execution operation of the CHO;
item A-4: second indication information, where the second indication information is used for indicating related information of a CHO configuration;
item A-5: third indication information, where the third indication information is used for instructing the terminal to perform CHO evaluation;
item A-6: fourth indication information, where the fourth indication information is used for instructing the terminal to perform CHO-related measurement; or
item A-7: time configuration information, where the time configuration information is used for indicating a time when the terminal to perform the CHO evaluation.

In the foregoing item A-1, an implementation manner is: the network side device may use two bits to indicate one of four energy saving modes to be entered by a network currently. The four energy saving modes are respectively: cell off, cell DTX, CSI adaptation, and cell normal.

In the foregoing item A-2, the cell bar is used for prohibiting terminals in IDLE and INACTIVE states from camping. If a terminal in a connected state receives the cell bar, the terminal may be triggered to initiate a CHO-related operation. Further, a UE receives the cell bar in a SIB1. If a network side carries cell bars for different network energy saving modes, the UE may further determine, based on whether the UE supports a corresponding energy saving mode, whether to initiate a CHO-related operation. For example, if the SIB1 carries cell bar information corresponding to cell DTX and indicates "barred", and the UE does not support a cell DTX mode, the UE initiates the CHO-related operation. If the UE supports a Cell DTX mode, the UE skips initiating the CHO-related operation, or whether the UE initiates the CHO-related operation is determined by the UE.

In the foregoing item A-3, the "initiating, by the terminal, an execution operation of the CHO" refers to an operation in which the terminal selects a candidate target cell and performs handover on the candidate target cell, is alternatively referred to as a CHO execution operation, and belongs to a sub-step in a process in which the terminal performs the CRO.

Herein, "initiating an execution operation of CRO" may include:
in a case that the CHO configuration of the terminal includes a plurality of candidate target cells, selecting, by the terminal, a cell from the plurality of candidate target cells to perform cell handover, or sequentially attempting to perform cell handover on the plurality of candidate target cells until handover succeeds or a quantity of attempts reaches a preset quantity of times.

As can be known, if the CHO configuration of the terminal includes a plurality of candidate target cells, the terminal may automatically determine which candidate target cell is selected to perform handover. If the handover fails, the terminal may attempt to perform CHO again on another candidate target cell. Optionally, whether the terminal attempts to perform CHO on the plurality of candidate cells may depend on a configuration of the network side device.

The initiating the CHO-related operation may include at least one of the following items B-1 to B-4:
item B-1: initiating an execution operation of the CHO;
item B-2: initiating an operation of changing or applying a CHO configuration;
item B-3: initiating a CHO evaluation operation in a case that the terminal is configured with the CHO and CHO evaluation is not started; or
item B-4: initiating a CHO-related measurement operation.

In a case that the control information includes one or more of the foregoing items A-1 to A-6, for operation or operations in B-1 to B-4 that the terminal initiates, refer to descriptions hereinbefore. Details are not described herein again.

It can be learned from the foregoing step 301 that, in embodiments of this application, the network side device can send the control information to the terminal, in this way, the terminal may an receive the control information, to initiate the CHO-related operation in response to the control information. The control information is used for triggering the CHO-related operation. Herein, the initiating the CHO-related operation includes at least one of the following: initiating an execution operation of CHO, initiating an operation of changing or applying a CHO configuration, initiating a CHO evaluation operation in a case that the terminal is configured with the CHO and the CHO evaluation is not started, or initiating a CHO-related measurement operation. As can be known, in this embodiment of this application, after receiving the control information, the terminal may initiate at least one of initiating the execution operation of the CHO, initiating the operation of changing or applying the CHO configuration, initiating the CHO evaluation operation in a case that the terminal is configured with the CHO and the CHO evaluation is not started, or initiating the CHO-related measurement operation. It can be learned that, in this embodiment of this application, the terminal may initiate more CHO-related operations based on a received trigger message, so that an implementation process of the CHO is more flexible, and may further be applicable to conditional handover in more scenarios.

For example, before the source cell enters the energy saving state, the CHO may be configured for the terminal in a connected state in advance. When the source cell determines to enter the energy saving state, the control information is sent to trigger a plurality of terminals to perform conditional handover. In this way, after the terminals are all handed over to the candidate target cell, the source cell can enter the energy saving state. It can be learned that, in this embodiment of this application, the plurality of terminals can uniformly and rapidly complete conditional handover, so as to enable the source cell to enter the energy saving state as soon as possible. That is, in this embodiment of this application, conditional handover in a network energy saving scenario may be implemented.

Optionally, the second indication information includes at least one of the following items C-1 to C-3:
item C-1: a threshold offset of a CHO execution condition;
item C-2: fifth indication information, where the fifth indication information is used for instructing the terminal to adjust a threshold of the CHO execution condition according to a predefined threshold offset of the CHO execution condition; or
item C-3: sixth indication information, where the sixth indication information is used for indicating the terminal to use a specific CHO execution condition.

Herein, it is to be noted that, in item C-2, the threshold offset of the predefined CHO execution condition may be agreed on by a protocol, or may be configured by the network side device for the terminal in the CHO configuration in advance, where
in a case that the second indication information includes at least one of the fifth indication information or the threshold offset of the CHO execution condition, the terminal may change the threshold of the CHO execution condition according to the at least one of the fifth indication information or the threshold offset of the CHO execution condition; or
in a case that the second indication information includes the sixth indication information, the terminal may perform a CHO evaluation operation by using the specific CHO execution condition.

Optionally, the method further includes:
receiving, by the network side device, notification information, where the notification information is used for indicating that the terminal does not find a candidate target cell satisfying a CHO execution condition within a preset time.

The foregoing preset time may be a time indicated by time configuration information. The time configuration information may be pre-configured for the terminal by the network side device (for example, configured before the terminal receives the control information), or may be configured by using the control information (that is, the time configuration information is carried in the control information), or may be agreed on by a protocol.

As can be known, the terminal is configured with the foregoing preset time, and when the terminal performs the CHO evaluation, the terminal performs CHO evaluation in the preset time period. If the candidate target cell satisfying the CHO execution condition cannot be found in the preset time, the network side device may be informed of the case, so that the network side device makes a proper decision, for example, does not enter an energy saving state.

Optionally, the method further includes:
configuring, by the network side device, the terminal to perform a first operation or a second operation in a case that a radio link failure RLF is detected, where
the first operation includes initiating the CHO-related operation; and
the second operation includes performing RRC re-establishment, and performing, in a case that a first cell selected during the RRC reestablishment is the candidate target cell in the CHO configuration of the terminal, handover based on the first cell; and sending an RRC re-establishment request on the first cell in a case that the first cell is not the candidate target cell in the CHO configuration of the terminal.

The first operation may further include performing RRC re-establishment in a case in which CHO fails.

Another implementation manner is that the terminal performs the foregoing first operation when the RLF is detected, which may be configured by the network side device. If the network side device does not configure, the terminal initiates the RRC re-establishment by default, or performs the foregoing second operation by default.

Optionally, sending, by the network side device, the control information includes at least one of the following:
sending, by the network side device, a system message (for example SIB1), where the system message carries the control information;
sending, by the network side device, a short message, where the short message carries the control information;
sending, by the network side device, a paging message, where the paging message carries the control information; or
sending, by the network side device, group common downlink control information, where the group common downlink control information carries the control information.

As can be known, in this embodiment of this application, the network side device may send the control information by using at least one of the system message, the short message, the paging message, or the group common DCI. That is, at least one of the system message, the short message, the paging message, or the group common DCI may include at least one of the following items A-1 to A-7:
item A-1: first indication information, where the first indication information is used for instructing at least one of: the network side device to enter an energy saving state or an energy saving mode to be entered by the network side device;
item A-2: a cell bar, where the cell bar is used for instructing a cell to prohibit at least some terminals (for example, terminals in an IDLE (IDLE) state or an INACTIVE state) from camping;
item A-3: indication information instructing the terminal to initiate an execution operation of the CHO;
item A-4: second indication information, where the second indication information is used for indicating related information of a CHO configuration;
item A-5: third indication information, where the third indication information is used for instructing the terminal to perform CHO evaluation;
item A-6: fourth indication information, where the fourth indication information is used for instructing the terminal to perform CHO-related measurement; or
item A-7: time configuration information, where the time configuration information is used for indicating a time when the terminal to perform the CHO evaluation.

In conclusion, specific implementation manners of the conditional handover method according to this embodiment of this application may be described in the following implementation manners 1 to 9. It may be understood that the specific implementation manners of the conditional handover method are not limited to the following implementation manners 1 to 9.

Implementation manner 1: A UE receives a cell bar in a system message, to trigger the UE to initiate a CHO execution operation. Details are described in the following steps 1.1 to 1.3:
Step 1.1: The UE is in an RRC connected state, and after receiving a CHO configuration, the UE saves the CHO configuration.
Step 1.2: After the UE receives the CHO configuration, the UE monitors a broadcast SIB1.

The UE may monitor according to a predefined SIB1 periodicity (for example, 160 ms), or monitor according to a SIB1 periodicity configured by a network side device (for example, a SIB1 repetition periodicity is configured).

In addition, in a case that a common search space is configured on an ACTIVE BWP or an initial BWP of the UE, the UE may monitor a broadcast SIB1.

Step 1.3: If the SIB1 monitored by the UE carries a cell bar, the UE initiates an execution operation of CHO (that is, selects a cell from at least one candidate target cell included in the CHO configuration for performing handover).

It is to be noted that in a scenario, for example, a source cell configures a default candidate target cell for a low-speed or static UE, and coverage of the candidate target cell includes coverage of the source cell. In this case, when the source cell sends a message to trigger the UE to initiate the execution operation of the CHO, the UE may not need to evaluate quality of the candidate target cell. In this scenario, the source cell sends the cell bar in the SIB1, to prevent a UE in an RRC IDLE/INACTIVE state from camping on the cell. Therefore, this signaling may be considered to be reused, and the UE in a connected state reads the cell bar in the SIB1 to trigger the CHO, thereby avoiding introducing new signaling overhead.

It may be understood that if the CHO configuration includes a plurality of candidate target cells, the UE may automatically determine which candidate target cell is selected to perform handover. If the handover fails, the UE may attempt to initiate the execution operation of the CHO again on another candidate target cell. Optionally, whether the UE attempts to initiate the execution operation of the CHO on a plurality of candidate cells may depend on a configuration of the network side device.

Implementation manner 2: The UE receives control information in a short message, to trigger the UE to initiate an execution operation of CRO. Details are described in the following steps 2.1 to 2.3:

Step 2.1: The UE is in an RRC connected state, and after receiving a CHO configuration, the UE saves the CHO configuration.

Optionally, after receiving the CHO configuration, the UE starts CHO evaluation by default.

Step 2.2: The UE monitors a short message.

The UE may monitor according to a current short message monitoring paging occasion (for example, the UE needs to monitor at least once at any paging occasion (PO) position within a modification periodicity), or the UE monitors according to a monitoring paging occasion of a short message configured by a network side device or agreed on by a protocol (for example, monitoring at fixed one or more PO positions).

Step 2.3: If the short message monitored by the UE carries control information, the UE initiates an execution operation of CHO, where the control information includes first indication information, and the first indication information instructs the network side device to enter an energy saving state.

Implementation manner 3: The UE first receives a notification in the short message, and then receives the control information in SIB1, to trigger the UE to initiate an execution operation of the CRO. Details are described in the following steps 3.1 to 3.3:
Step 3.1: The UE is in an RRC connected state, and after receiving a CHO configuration, the UE saves the CHO configuration.
Step 3.2: The UE monitors a short message.

The UE may monitor according to a current short message monitoring paging occasion (for example, the UE needs to monitor at least once at any PO position within a modification periodicity), or the UE monitors according to a monitoring paging occasion of a short message configured by a network side device or agreed on by a protocol (for example, monitoring at fixed one or more PO positions).

Step 3.3: The UE needs to obtain a broadcast SIB1 if a short message monitored by the UE indicates at least one of the following:
a system message changes;
a network energy saving-related system message changes; or
a CHO-related system message changes.

Step 3.4: The UE receives a SIB1, where the SIB1 instructs the network side device to enter a cell DTX or DRX energy saving mode (for example, the SIB1 carries control information, the control information includes first indication information, and the first indication information instructs the network side device to enter the cell DTX/DRX energy saving mode).

Step 3.5: If the UE does not support the cell DTX or the DRX energy saving mode, the UE initiates an execution operation of CHO. If the UE supports a cell DTX/DRX energy saving mode, the UE skips initiating the execution operation of the CHO or whether to initiate the execution operation of the CHO depends on UE implementation.

Implementation manner 4: The UE receives a short message to obtain a system message change, so as to trigger the UE to monitor a SIB1 to obtain information used for adjusting a CHO configuration. Details are described in the following 4.1 to 4.4:
Step 4.1: The UE is in an RRC connected state, and after receiving the CHO configuration, the UE saves the CHO configuration and starts CHO evaluation. For example, if the received CHO configuration indicates that an event A3 or A5 is a CHO execution condition, evaluation is performed based on the event A3 or A5.

If an execution condition of the CHO is not satisfied because a threshold configured by the network side device is relatively high, the UE does not perform conditional handover.

Step 4.2: The UE receives a short message, and if the short message indicates that system information related to network energy saving changes, the UE receives a SIB1.

Step 4.3: The UE receives the SIB1, and if the SIB1 indicates related information of the CHO configuration (for example, the SIB1 carries control information, and the control information includes second indication information used for indicating the related information of the CHO configuration), the UE adjusts a threshold of a trigger event (that is, the execution condition) in the currently saved CHO configuration. For example, the threshold of the source cell is increased by offset1, and the threshold of the candidate target cell is decreased by offset2.

Optionally, the second indication information includes at least one of the following:
a threshold offset of a CHO execution condition; or
fifth indication information, where the fifth indication information is used for instructing the terminal to adjust a threshold of the CHO execution condition according to a predefined threshold offset of the CHO execution condition (herein, the predefined threshold offset of the CHO execution condition may be agreed on by a protocol or may be provided by a CHO configuration in advance).

Step 4.4: The UE performs CHO evaluation based on the adjusted CHO configuration, and initiates an execution operation of CHO when an execution condition of the CHO is satisfied.

Implementation manner 5: The UE receives a short message to obtain a system message change, so as to trigger the UE to monitor a SIB1 to use a dedicated CHO configuration. Details are described in the following steps 5.1 to 5.4:
Step 5.1: The UE is in an RRC connected state, and after receiving a CHO configuration, the UE saves the CHO configuration.

The CHO is configured to use events A5 and A4 as an execution condition, and the UE first starts CHO evaluation based on A5. It is to be noted that, in this case, evaluation of the event A4 has not been started yet.

Step 5.2: The UE receives a short message, and if the short message indicates that system information related to network energy saving changes, the UE receives a SIB1.

Step 5.3: The UE receives the SIB1, and if the SIB1 carries a network side energy saving indication (for example, the SIB1 carries control information, the control information includes first indication information, and the first indication information instructs a network side device to enter an energy saving state or an energy saving mode to be entered by the network side device), the UE performs the CHO evaluation based on the event A4 (that is, only the candidate target cell needs to satisfy a configured quality threshold).

Step 5.4: If the execution condition of the CHO is satisfied, the UE initiates an execution operation of the CHO.

Implementation manner 6: The UE receives a short message to obtain a system message change, so as to trigger the UE to monitor a SIB1 to trigger evaluation of the CHO. Details are described in the following steps 6.1 to 6.3:
Step 6.1: The UE is in an RRC connected state and receives a CHO configuration, where CHO is configured to use the event A4 as an execution condition, and the UE saves the CHO configuration but does not start CHO evaluation.
Step 6.2: The UE receives the SIB1, and if the SIB1 carries a network side energy saving indication (for example, the SIB1 carries control information, the control information includes first indication information, and the first indication information instructs a network side device to enter an energy saving state or an energy saving mode to be entered by the network side device), the UE starts the CHO evaluation (that is, only the candidate target cell needs to meet a configured quality threshold).
Step 6.3: If the execution condition of the CHO is satisfied, the UE initiates an execution operation of the CHO.

Implementation manner 7: The UE receives a system message, and starts CHO-related measurement. Details are described in the following steps 7.1 to 7.3:
Step 7.1: The UE is in an RRC connected state and receives a CHO configuration, and the UE saves the CHO configuration.

Because of relatively good quality of the source cell, the UE does not start neighbor cell measurement.

Step 7.2: The UE receives a SIB1, and if SIB1 instructs the UE to start CHO-related measurement, the UE performs the CHO-related measurement.

Step 7.3: If the execution condition of the CHO is satisfied, the UE initiates an execution operation of the CHO.

Implementation 8: The UE sends notification information to the network side device if the candidate target cell does not satisfy the condition within a specified time. Details are described in the following steps 8.1 to 8.3:
Step 8.1: The UE is in an RRC connected state and receives a CHO configuration, and the UE saves the CHO configuration, where CHO is configured to use events A5 and A4 as an execution condition, and the UE first starts CHO evaluation based on the event A5. It is to be noted that, in this case, evaluation of the event A4 has not been started yet.
Step 8.2: The UE receives the SIB1, and if the SIB1 carries a network side energy saving indication (for example, the SIB1 carries control information, the control information includes first indication information, and the first indication information instructs a network side device to enter an energy saving state or an energy saving mode to be entered by the network side device), the UE performs the CHO evaluation based on the event A4, that is, only the candidate target cell needs to satisfy a configured quality threshold; and if the SIB1 further carries time configuration information, the UE saves the time configuration information.
Step 8.3: If the UE does not find a candidate target cell satisfying an execution condition (that is, a candidate target cell satisfying the event A4) within the time specified by the time configuration information, the UE sends notification information to the network side device; otherwise, the UE initiates an execution operation of CRO.

The notification information is used for indicating that a candidate target cell satisfying the event A4 is not found within the time indicated by the time configuration information.

In addition, the notification information may be an RRC message, a MAC CE, or UCI.

Optionally, an uplink resource for the UE to send the control information is preconfigured or common to a cell.

Implementation manner 9: A behavior of the UE on occurrence of an RLF is specifically described in the following steps 9.1 to 9.4:
Step 9.1: The UE is in an RRC connected state and receives a CHO configuration, and the UE saves the CHO configuration.
Step 9.2: The UE detects an RLF, and the UE performs step 9.3 or 9.4.
Step 9.3: The UE initiates a CHO-related operation, and if CHO fails, the UE performs RRC re-establishment.
Step 9.4: The UE performs the RRC re-establishment, performs cell selection during the RRC re-establishment, and if a cell selected by the UE is just a candidate target cell in the CHO, performs handover based on the selected cell; otherwise, the UE sends an RRC re-establishment request on the selected cell.

Optionally, the UE performs operation step 9.3 when the RLF is detected, which may be configured by a network side device. If the network side device does not configure, the UE performs operation step 9.4 by default.

In conclusion, in the embodiments of this application, an existing conditional handover CHO process is enhanced, to consider an impact brought by an energy saving mode of a source cell/a target cell. That is, before the source cell enters the energy saving state, the network side device may configure CHO (that is, one or more candidate target cells and corresponding access configuration information) for the terminal in a connected state in advance. When the source cell determines to enter the energy saving state, the network side device sends the foregoing control information to trigger a plurality of pieces of UE to perform conditional handover. After terminals are all handed over to the candidate target cell, the source cell may enter the energy saving state.

In addition, this embodiment of this application further considers whether to directly perform conditional handover when the UE receives the foregoing control information in a case that the candidate target cell has poor quality or there is no measurement result of the candidate target cell, so as to avoid a possible handover failure.

The conditional handover method according to the embodiments of this application may be performed by a conditional handover apparatus. In this embodiment of this application, the conditional handover apparatus according to this embodiment of this application is described by using an example in which the conditional handover apparatus performs the conditional handover method.

According to a third aspect, embodiments of this application further provide a conditional handover apparatus, which may be applied to a terminal. As shown in FIG. 4, the conditional handover apparatus 40 may include the following modules:
a first receiving module 401, configured to receive control information, where the control information is used for triggering a conditional handover CHO-related operation;
a first processing module 402, configured to initiate the CHO-related operation in response to the control information, where
the initiating the CHO-related operation includes at least one of the following:
   initiating an execution operation of CHO;
   initiating an operation of changing or applying a CHO configuration;
   initiating a CHO evaluation operation in a case that the terminal is configured with the CHO and CHO evaluation is not started; or
   initiating a CHO-related measurement operation.

Optionally, the first processing module 402 includes:
a first processing submodule, configured to: in a case that the control information includes at least one of first indication information, a cell bar, or indication information instructing the terminal to initiate the execution operation of the CHO, initiate the execution operation of the CHO, where
the first indication information is used for instructing at least one of: a network side device to enter an energy saving state or an energy saving mode to be entered by the network side device; and
the cell bar is used for instructing a cell to prohibit at least some terminals from camping.

Optionally, the first processing module 402 includes:
a second processing submodule, configured to: in a case that the control information includes at least one of first indication information, a cell bar, or second indication information, initiate an operation of changing or applying the CHO configuration, where
the first indication information is used for instructing at least one of: a network side device to enter an energy saving state or an energy saving mode to be entered by the network side device;
the cell bar is used for instructing a cell to prohibit at least some terminals from camping; and
the second indication information is used for indicating related information of the CHO configuration.

Optionally, the apparatus further includes:
a first configuration evaluation module, configured to: after receiving a CHO configuration, save the CHO configuration, and initiate a CHO evaluation operation corresponding to the CHO configuration.

Optionally, the first processing module 402 further includes:
a third processing submodule, configured to: in a case that the control information includes at least one of first indication information, a cell bar, or third indication information, and the terminal is configured with the CHO and CHO evaluation is not started, initiate the CHO evaluation operation corresponding to the CHO configuration configured for the terminal, where
the first indication information is used for instructing at least one of: a network side device to enter an energy saving state or an energy saving mode to be entered by the network side device;
the cell bar is used for instructing a cell to prohibit at least some terminals from camping; and
the third indication information is used for instructing the terminal to initiate the CHO evaluation operation.

Optionally, the apparatus further includes:
a first control module, configured to: in a case that the CHO configuration received by the terminal includes an execution condition based on an event A4, skip starting the CHO evaluation operation on the execution condition based on the event A4;
   or,
a second control module, configured to: after the terminal receives the CHO configuration, skip starting the CHO evaluation operation corresponding to the received CHO configuration according to an indication of the network side device.

Optionally, the first processing module 402 further includes:
a fourth processing submodule, configured to: in a case that the control information includes at least one of first indication information, a cell bar, or fourth indication information, initiate the CHO-related measurement operation by the terminal, where
the first indication information is used for instructing at least one of: a network side device to enter an energy saving state or an energy saving mode to be entered by the network side device;
the cell bar is used for instructing a cell to prohibit at least some terminals from camping; and
the fourth indication information is used for instructing the terminal to initiate the CHO-related measurement operation.

Optionally, the apparatus further includes:
a second processing module, configured to: in a case that the terminal does not support the energy saving mode to be entered by the network side device, initiate the CHO-related operation.

Optionally, the apparatus further includes:
a third processing module, configured to: in a case that the terminal supports the energy saving mode to be entered by the network side device, skip initiating the CHO-related operation or whether to initiate the CHO-related operation is determined by the terminal.

Optionally, the second indication information includes at least one of the following:
a threshold offset of a CHO execution condition;
fifth indication information, where the fifth indication information is used for instructing the terminal to adjust a threshold of the CHO execution condition according to a predefined threshold offset of the CHO execution condition; or
sixth indication information, where the sixth indication information is used for indicating the terminal to use a specific CHO execution condition.

Optionally, the second processing submodule is specifically configured to perform at least one of the following:
in a case that the second indication information includes at least one of the fifth indication information or the threshold offset of the CHO execution condition, changing the threshold of the CHO execution condition according to the at least one of the fifth indication information or the threshold offset of the CHO execution condition; or
in a case that the second indication information includes the sixth indication information, performing a CHO evaluation operation by using the specific CHO execution condition.

Optionally, the apparatus further includes:
a second sending module, configured to: in a case that a candidate target cell satisfying the CHO execution condition is not found within a preset time after the terminal receives the control information, send notification information to the network side device, where the notification information is used for indicating that the candidate target cell satisfying the CHO execution condition is not found within the preset time.

Optionally, an uplink resource of the notification information is preconfigured, or the uplink resource of the notification information is a cell common resource.

Optionally, the apparatus further includes:
a fourth processing module, configured to: in a case that a radio link failure RLF occurs before the terminal receives the control information, perform a first operation or a second operation, where
the first operation includes initiating the CHO-related operation; and
the second operation includes performing RRC re-establishment, and performing, in a case that a first cell selected during the RRC reestablishment is the candidate target cell in the CHO configuration of the terminal, handover based on the first cell; and sending an RRC re-establishment request on the first cell in a case that the first cell is not the candidate target cell in the CHO configuration of the terminal.

Optionally, the fourth processing module is specifically configured to:
in a case that the network side device configures that the terminal performs the first operation when the RLF is detected, perform the first operation; or,
in a case that the network side device configures that the terminal performs the second operation when the RLF is detected, perform the second operation.

Optionally, the control information further includes a cell list. The apparatus further includes:
a fifth processing module, configured for: in a case that a CHO failure occurs on the terminal, the terminal to select a second cell from the cell list, and send an RRC reestablishment request on the second cell.

Optionally, the first receiving module is specifically configured to perform at least one of the following:
receiving a system message, where the system message carries the control information;
receiving a short message, where the short message carries the control information;
receiving a paging message, where the paging message carries the control information; or
receiving group common downlink control information, where the group common downlink control information carries the control information.

Optionally, a paging occasion when the terminal receives the system message is configured by a network side or agreed on by a protocol.

Optionally, the first receiving module receives the system message, and is specifically configured to perform at least one of the following:
in a case that a target condition is satisfied, receiving broadcast system message; or
in a case that the short message received by the terminal indicates target content, receiving the broadcast system message, where
the target condition includes at least one of the following:
   an activated bandwidth part BWP of the terminal is configured with a common search space of the system message;
   an initial bandwidth part BWP of the terminal is configured with a common search space of the system message;
   the terminal is configured with monitored and broadcast system message; or
   the terminal receives the CHO configuration; and
   the target content includes at least one of the following:
      a system message changes;
      a network energy saving-related system message changes; or
      a CHO-related system message changes.

Optionally, the first receiving module receives the short message, and is specifically configured to:
in a case that an activated BWP or an initial BWP of the terminal is configured with a paging common search space, receive the short message.

Optionally, the first receiving module receives the short message, and is specifically configured to:
monitor the short message on a paging occasion configured or predefined by the network side device;
   or,
monitor the short message on a time window configured or predefined by the network side device.

Optionally, the first receiving module receives the paging message, and is specifically configured to:
in a case that the short message received by the terminal instructs the terminal in a connected state to monitor the paging message, receive the paging message.

The conditional handover apparatus according to this embodiment of this application can implement all processes implemented by the method embodiments in FIG. 2 and achieve the same technical effects. To avoid repetition, details are not described herein again.

The conditional handover apparatus in the embodiments of this application may be an electronic device, for example, an electronic device having an operating system, or a component in an electronic device, such as an integrated circuit or a chip. The electronic device may be a terminal. For example, the terminal may include, but is not limited to, the type of the terminal 11 listed above. This is not specifically limited in the embodiments of this application.

According to a fourth aspect, embodiments of this application further provide a conditional handover apparatus, which may be applied to a network side device. As shown in FIG. 5, the conditional handover apparatus 50 may include:
a first sending module 501, configured to send control information, where the control information is used for triggering a terminal to initiate a conditional handover CHO-related operation;
the initiating a conditional handover CHO-related operation includes at least one of the following:
   initiating an execution operation of CHO;
   initiating an operation of changing or applying a CHO configuration;
   initiating a CHO evaluation operation in a case that the terminal is configured with the CHO and CHO evaluation is not started; or
   initiating a CHO-related measurement operation.

Optionally, the control information includes at least one of the following:
first indication information, where the first indication information is used for instructing at least one of: the network side device to enter an energy saving state or an energy saving mode to be entered by the network side device;
a cell bar, where the cell bar is used for instructing a cell to prohibit at least some terminals from camping;
indication information instructing the terminal to initiate the execution operation of the CHO;
second indication information, where the second indication information is used for indicating related information of the CHO configuration;
third indication information, where the third indication information is used for instructing the terminal to perform CHO evaluation;
fourth indication information, where the fourth indication information is used for instructing the terminal to perform CHO-related measurement; or
time configuration information, where the time configuration information is used for indicating a time when the terminal performs the CHO evaluation.

Optionally, the second indication information includes at least one of the following:
a threshold offset of a CHO execution condition;
fifth indication information, where the fifth indication information is used for instructing the terminal to adjust a threshold of the CHO execution condition according to a predefined threshold offset of the CHO execution condition; or
sixth indication information, where the sixth indication information is used for indicating the terminal to use a specific CHO execution condition.

Optionally, the apparatus further includes:
a second receiving module, configured to receive notification information, where the notification information is used for indicating that the terminal does not find a candidate target cell satisfying a CHO execution condition within a preset time.

Optionally, the apparatus further includes:
a configuration module, configured to configure the terminal to perform a first operation or a second operation in a case that a radio link failure RLF is detected, where
the first operation includes initiating the CHO-related operation; and
the second operation includes performing RRC re-establishment, and performing, in a case that a first cell selected during the RRC reestablishment is the candidate target cell in the CHO configuration of the terminal, handover based on the first cell; and sending an RRC re-establishment request on the first cell in a case that the first cell is not the candidate target cell in the CHO configuration of the terminal.

Optionally, the first sending module 501 is specifically configured to perform at least one of the following:
sending a system message, where the system message carries the control information;
sending a short message, where the short message carries the control information;
sending a paging message, where the paging message carries the control information; or
sending group common downlink control information, where the group common downlink control information carries the control information.

The conditional handover apparatus in the embodiments of this application may be an electronic device, for example, an electronic device having an operating system, or a component in an electronic device, such as an integrated circuit or a chip. The electronic device may be a network side device. For example, the network side device may include, but is not limited to, the type of the network side device 12 listed above. This is not specifically limited in the embodiments of this application.

The conditional handover apparatus according to this embodiment of this application can implement all processes implemented by the method embodiments in FIG. 3 and achieve the same technical effects. To avoid repetition, details are not described herein again.

The conditional handover apparatus in the embodiments of this application may be an electronic device, for example, an electronic device having an operating system, or a component in an electronic device, such as an integrated circuit or a chip. The electronic device may be a network side device. For example, the network side device may include, but is not limited to, the type of the network side device 12 listed above. This is not specifically limited in the embodiments of this application.

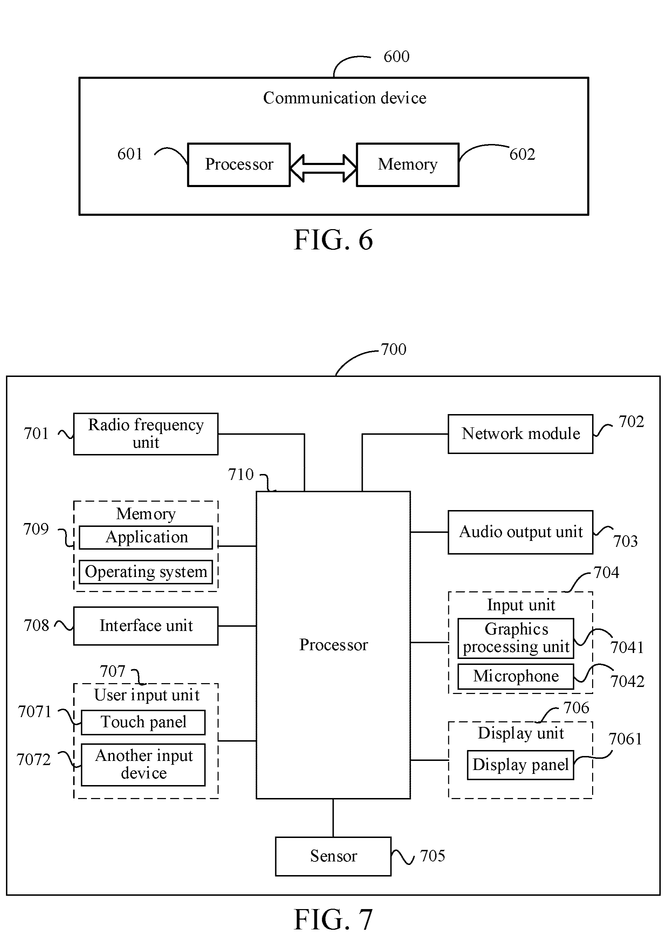

As shown in FIG. 6, embodiments of this application further provide a communication device 600, including a processor 601 and a memory 602. The memory 602 stores a program or instructions executable by the processor 601, for example, when the communication device 600 is a terminal, the program or instructions implement various steps of the foregoing conditional handover method when executed by the processor 601, and the same technical effects can be achieved. When the communication device 600 is a network side device, the program or instructions implement various steps of the foregoing conditional handover method when executed by the processor 601 and can achieve the same technical effects. To avoid repetition, details are not described herein again.

Embodiments of this application further provide a terminal, including a processor and a communication interface. The communication interface is coupled to the processor, and the processor is configured to run a program or instructions, to implement steps of the method embodiment shown in FIG. 7. This terminal embodiment corresponds to the foregoing terminal side method embodiment. Various implementation processes and implementation manners of the foregoing method embodiment are applicable to the terminal embodiment, and can achieve the same technical effects. Specifically, FIG. 7 is a schematic diagram of a hardware structure of a terminal according to an embodiment of this application.

The terminal 700 includes but is not limited to at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (for example, a battery) that supplies power to each component. The power supply may be logically connected to the processor 710 through a power management system, so that functions such as charging management, discharging management, and power consumption management are implemented through the power management system. The structure of the terminal shown in FIG. 7 does not constitute a limitation to the terminal. The terminal may include more or fewer components than those shown in the figure, or combine some components, or have different component arrangements. Details are not described herein again.

It is to be understood that, in the embodiments of this application, the input unit 704 may include a graphics processing unit (Graphics Processing Unit, GPU) 7041 and a microphone 7042. The graphics processing unit 7041 processes image data of static pictures or videos captured by an image capture apparatus (for example, a camera) in a video capture mode or an image capture mode. The display unit 706 may include a display panel 7061. The display panel 7061 may be configured in a form of a liquid crystal display, an organic light-emitting diode, or the like. The user input unit 707 includes at least one of a touch panel 7071 or another input device 7072. The touch panel 7071 is alternatively referred to as a touchscreen. The touch panel 7071 may include two parts, namely a touch detection apparatus and a touch controller. The another input device 7072 may include, but is not limited to, a physical keyboard, a functional key (such as a volume control key or a switch key), a track ball, a mouse, and a joystick. Details are not described herein again.

In embodiments of this application, after receiving downlink data from a network side device, the radio frequency unit 701 may transmit the downlink data to the processor 710 for processing. In addition, the radio frequency unit 701 may send the uplink data to the network side device. Generally, the radio frequency unit 701 includes, but is not limited to, an antenna, an amplifier, a transceiver, a coupler, a low noise amplifier, a duplexer, and the like.

The memory 709 may be configured to store a software program or instructions and various types of data. The memory 709 may mainly include a first storage area storing a program or instructions and a second storage area storing data. The first storage area may store an operating system, an application or instructions required by at least one function (for example, a sound playback function and an image display function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DR RAM). The memory 709 in the embodiments of this application includes, but is not limited to, these and any other suitable types of memories.

The processor 710 may include one or more processing units. Optionally, an application processor and a modem processor are integrated into the processor 710. The application processor is mainly configured to process operations related to an operating system, a user interface, an application, and the like. The modem processor such as a baseband processor is mainly configured to process a wireless communication signal. It may be understood that the foregoing modem may be not integrated into the processor 710.

The radio frequency unit 701 is configured to receive control information, where the control information is used for triggering a conditional handover CHO-related operation.

The processor 710 is configured to initiate the CHO-related operation in response to the control information, where
the initiating the CHO-related operation includes at least one of the following:
initiating an execution operation of CHO;
initiating an operation of changing or applying a CHO configuration;
initiating a CHO evaluation operation in a case that the terminal is configured with the CHO and CHO evaluation is not started; or
initiating a CHO-related measurement operation.

Optionally, initiating, by the processor 710, the CHO-related operation includes:
in a case that the control information includes at least one of first indication information, a cell bar, or indication information instructing the terminal to initiate the execution operation of the CHO, initiating the execution operation of the CHO, where
the first indication information is used for instructing at least one of: a network side device to enter an energy saving state or an energy saving mode to be entered by the network side device; and
the cell bar is used for instructing a cell to prohibit at least some terminals from camping.

Optionally, initiating, by the processor 710, the CHO-related operation includes:
in a case that the control information includes at least one of first indication information, a cell bar, or second indication information, initiating the operation of changing or applying the CHO configuration, where
the first indication information is used for instructing at least one of: a network side device to enter an energy saving state or an energy saving mode to be entered by the network side device;
the cell bar is used for instructing a cell to prohibit at least some terminals from camping; and
the second indication information is used for indicating related information of the CHO configuration.

Optionally, before the radio frequency unit 701 receives the control information, the processor 710 is further configured for:
after receiving the CHO configuration, the radio frequency unit 701 to save the CHO configuration, and initiate a CHO evaluation operation corresponding to the CHO configuration.

Optionally, initiating, by the processor 710, the CHO-related operation further includes:
in a case that the control information includes at least one of first indication information, a cell bar, or third indication information, and the terminal is configured with the CHO and CHO evaluation is not started, initiating the CHO evaluation operation corresponding to the CHO configuration configured for the terminal, where
the first indication information is used for instructing at least one of: a network side device to enter an energy saving state or an energy saving mode to be entered by the network side device;
the cell bar is used for instructing a cell to prohibit at least some terminals from camping; and
the third indication information is used for instructing the terminal to initiate the CHO evaluation operation.

Optionally, the processor 710 is further configured to:
in a case that the CHO configuration received by includes an execution condition based on event A4, skip starting the CHO evaluation operation on the execution condition based on the event A4;
   or,
after the terminal receives the CHO configuration, skip starting, according to an indication of the network side device, the CHO evaluation operation corresponding to the received CHO configuration.

Optionally, initiating, by the processor 710, the CHO-related operation further includes:
in a case that the control information includes at least one of first indication information, a cell bar, or fourth indication information, sending CHO-related measurement, where
the first indication information is used for instructing at least one of: a network side device to enter an energy saving state or an energy saving mode to be entered by the network side device;
the cell bar is used for instructing a cell to prohibit at least some terminals from camping; and
the fourth indication information is used for instructing the terminal to initiate the CHO-related measurement operation.

Optionally, the processor 710 is further configured to:
in a case that the terminal does not support the energy saving mode to be entered by the network side device, initiate the CHO-related operation.

Optionally, the processor 710 is further configured to:
in a case that the terminal supports the energy saving mode to be entered by the network side device, skip initiating the CHO-related operation or whether to initiate the CHO-related operation is determined by the terminal.

Optionally, the second indication information includes at least one of the following:
a threshold offset of a CHO execution condition;
fifth indication information, where the fifth indication information is used for instructing the terminal to adjust a threshold of the CHO execution condition according to a predefined threshold offset of the CHO execution condition; or
sixth indication information, where the sixth indication information is used for indicating the terminal to use a specific CHO execution condition.

Optionally, the initiating, by the processor 710, an operation of changing or applying a CHO configuration includes at least one of the following:
in a case that the second indication information includes at least one of the fifth indication information or the threshold offset of the CHO execution condition, changing the threshold of the CHO execution condition according to the at least one of the fifth indication information or the threshold offset of the CHO execution condition; or
in a case that the second indication information includes the sixth indication information, performing a CHO evaluation operation by using the specific CHO execution condition.

Optionally, the radio frequency unit 701 is further configured to:
in a case that a candidate target cell satisfying the CHO execution condition is not found within a preset time after the terminal receives the control information, sending notification information to the network side device, where the notification information is used for indicating that the candidate target cell satisfying the CHO execution condition is not found within the preset time.

Optionally, an uplink resource of the notification information is preconfigured, or the uplink resource of the notification information is a cell common resource.

Optionally, the processor 710 is further configured to:
in a case that a radio link failure RLF occurs on the terminal before the radio frequency unit 701 receives the control information, perform a first operation or a second operation, where
the first operation includes initiating the CHO-related operation; and
the second operation includes performing RRC re-establishment, and performing, in a case that a first cell selected during the RRC reestablishment is the candidate target cell in the CHO configuration of the terminal, handover based on the first cell; and sending an RRC re-establishment request on the first cell in a case that the first cell is not the candidate target cell in the CHO configuration of the terminal.

Optionally, performing, by the processor 710, the first operation or the second operation includes:
in a case that the network side device configures that the terminal performs the first operation when the RLF is detected, perform the first operation; or,
in a case that the network side device configures that the terminal performs the second operation when the RLF is detected, perform the second operation.

Optionally, the control information further includes a cell list. The processor 710 is further configured to:
in a case that a CHO failure occurs on the terminal, select a second cell from the cell list, and send an RRC re-establishment request on the second cell.

Optionally, receiving, by the radio frequency unit 701, the control information includes at least one of the following:
receiving a system message, where the system message carries the control information;
receiving a short message, where the short message carries the control information;
receiving a paging message, where the paging message carries the control information; or
receiving group common downlink control information, where the group common downlink control information carries the control information.

Optionally, a paging occasion when the terminal receives the system message is configured by a network side or agreed on by a protocol.

Optionally, receiving, by the radio frequency unit 701, the system message includes at least one of the following:
in a case that a target condition is satisfied, receiving broadcast system message; or
in a case that the short message received by the terminal indicates target content, receiving the broadcast system message, where
the target condition includes at least one of the following:
   an activated bandwidth part BWP of the terminal is configured with a common search space of the system message;
   an initial bandwidth part BWP of the terminal is configured with a common search space of the system message;
   the terminal is configured with monitored and broadcast system message; or
   the terminal receives the CHO configuration; and
   the target content includes at least one of the following:
      a system message changes;
      a network energy saving-related system message changes; or
      a CHO-related system message changes.

Optionally, receiving, by the radio frequency unit 701, the short message includes:
in a case that an activated BWP or an initial BWP of the terminal is configured with a paging common search space, receiving the short message.

Optionally, receiving, by the radio frequency unit 701, the short message includes:
monitoring the short message on a paging occasion configured or predefined by the network side device;
   or,
monitoring the short message on a time window configured or predefined by the network side device.

Optionally, receiving, by the radio frequency unit 701, the paging message includes:
in a case that the short message received by the terminal instructs the terminal in a connected state to monitor the paging message, receiving the paging message.

It may be understood that, for implementation processes of various implementation manners mentioned in this embodiment, refer to related descriptions of the conditional handover method according to the method embodiments, and the same or corresponding technical effects are achieved. To avoid repetition, details are not described herein again.

Embodiments of this application further provide a network side device, including a processor and a communication interface. The communication interface is coupled to the processor, and the processor is configured to run a program or instructions, to implement steps in the method embodiment shown in FIG. 3. The network side device embodiment corresponds to the foregoing network side device method embodiment. Various implementation processes and implementation manners of the foregoing method embodiments are all applicable to the network side device embodiment, and can achieve the same technical effects.

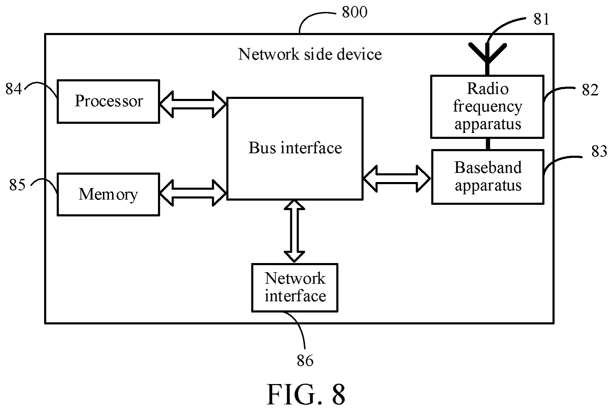

Specifically, embodiments of this application further provide a network side device. As shown in FIG. 8, the network side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 performs processing on information to be transmitted and transmits processed information to the radio frequency apparatus 82. The radio frequency apparatus 82 performs processing on the received information and transmits the processed information through the antenna 81.

The method performed by the network side device in the above embodiments may be implemented in the baseband apparatus 83. The baseband apparatus 83 includes a baseband processor.

For example, the baseband apparatus 83 may include at least one baseband board. A plurality of chips are arranged on the baseband board, as shown in FIG. 8, for example, one of the chips is a baseband processor and is connected to the memory 85 through a bus interface to call a program in the memory 85 to perform operations of a network device shown in the above method embodiments.

The network side device may further include a network interface 86. The interface is, for example, a group common radio interface (group common radio interface, CPRI).

Specifically, the network side device 800 in this embodiment of the present disclosure further includes: instructions or a program stored in the memory 85 and executable on the processor 84. The processor 84 calls the instructions or the program in the memory 85 to perform the method performed by each module shown in FIG. 5, and achieves the same technical effects. To avoid repetition, details are not described herein again.

Embodiments of this application further provide a readable storage medium. The readable storage medium stores a program or instructions. The program or the instructions implement various processes of the foregoing conditional handover method embodiment when executed by a processor, and can achieve the same technical effects. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk. In some examples, the readable storage medium may be a non-volatile readable storage medium,

Embodiments of this application further provide a chip. The chip includes a processor and a communication interface. The communication interface is coupled to the processor, and the processor is configured to run a program or an instruction to implement each process of the foregoing conditional handover method embodiments, and can achieve the same technical effects. To avoid repetition, details are not described herein again.

It is to be understood that the chip mentioned in this embodiment of this application may alternatively be referred to as a system level chip, a system chip, a chip system, a system-on-a-chip, and the like.

Embodiments of this application further provide a computer program/program product. The computer program/program product is stored in a storage medium. The computer program/program product is executed by at least one processor to implement various processes of the foregoing conditional handover method, and can achieve the same technical effects. To avoid repetition, details are not described herein again.

Embodiments of this application further provide a conditional handover system, including: a terminal and a network side device. The terminal may be configured to perform steps of the foregoing conditional handover method according to the first aspect. The network side device may be configured to perform steps of the foregoing conditional handover method according to the second aspect.

It is to be noted that, herein, terms "include", "comprise", or any other variation thereof herein are intended to cover a non-exclusive inclusion, such that a process, method, article or apparatus including a series of elements not only includes those elements, but also includes other elements that are not explicitly listed, or includes elements inherent to such a process, method, article or apparatus. Without more limitations, elements defined by the sentence "including one" does not exclude that there are other same elements in the process, the method, the article, or the apparatus. In addition, it is to be noted that scopes of the methods and apparatuses in implementations of this application are not limited to performing functions in an order shown or discussed, but may alternatively include performing the functions in a substantially simultaneous manner or in a reverse order according to the functions involved. For example, the described methods may be implemented in an order different from that described, and various steps may be added, omitted or combined. In addition, features described with reference to some examples may alternatively be combined in other examples.

Through the description of the above implementations, those skilled in the art can clearly understand that the embodiment method may be implemented by means of computer software and a necessary general hardware platform, and certainly, may alternatively be implemented through hardware. The computer software product is stored in a storage medium (such as a ROM, a RAM, a magnetic disk, and a compact disk), including several instructions to enable a terminal or a network side device) to perform the method in the embodiments of this application.

Embodiments of this application have been described above with reference to accompanying drawings. However, this application is not limited to the specific implementations. The specific embodiments are merely examples rather than restrictions. Those of ordinary skill in the art may make implementations in many forms under the teaching of this application without departing from the spirit of this application and the scope of protection of claims. These implementations all fall within the scope of protection of this application.

## Claims

1. A conditional handover method, comprising:
receiving, by a terminal, control information, wherein the control information is used for triggering a conditional handover CHO-related operation; and
initiating, by the terminal, the CHO-related operation in response to the control information, wherein
the initiating the CHO-related operation comprises at least one of the following:
initiating an execution operation of CHO;
initiating an operation of changing or applying a CHO configuration;
initiating a CHO evaluation operation in a case that the terminal is configured with the CHO and CHO evaluation is not started; or
initiating a CHO-related measurement operation.

2. The method according to claim 1, wherein the initiating, by the terminal, the CHO-related operation comprises:
in a case that the control information comprises at least one of first indication information, a cell bar, or indication information instructing the terminal to initiate the execution operation of the CHO, initiating, by the terminal, the execution operation of the CHO, wherein
the first indication information is used for instructing at least one of: a network side device to enter an energy saving state or an energy saving mode to be entered by the network side device; and
the cell bar is used for instructing a cell to prohibit at least some terminals from camping.

3. The method according to claim 1, wherein the initiating, by the terminal, the CHO-related operation comprises:
in a case that the control information comprises at least one of first indication information, a cell bar, or second indication information, initiating, by the terminal, the operation of changing or applying the CHO configuration, wherein
the first indication information is used for instructing at least one of: a network side device to enter an energy saving state or an energy saving mode to be entered by the network side device;
the cell bar is used for instructing a cell to prohibit at least some terminals from camping; and
the second indication information is used for indicating related information of the CHO configuration.

4. The method according to any one of claims 1 to 3, wherein before the receiving, by a terminal, control information, the method further comprises:
saving, by the terminal after receiving the CHO configuration, the CHO configuration, and initiating the CHO evaluation operation corresponding to the CHO configuration.

5. The method according to any one of claims 1 to 3, wherein the initiating, by the terminal, the CHO-related operation further comprises:
in a case that the control information comprises at least one of first indication information, a cell bar, or third indication information, and the terminal is configured with the CHO and CHO evaluation is not started, initiating, by the terminal, the CHO evaluation operation corresponding to the CHO configuration configured for the terminal, wherein
the first indication information is used for instructing at least one of: a network side device to enter an energy saving state or an energy saving mode to be entered by the network side device;
the cell bar is used for instructing a cell to prohibit at least some terminals from camping;
and
the third indication information is used for instructing the terminal to initiate the CHO evaluation operation.

6. The method according to claim 5, further comprising:
in a case that the CHO configuration received by the terminal comprises an execution condition based on an event A4, skipping starting, by the terminal, the CHO evaluation operation on the execution condition based on the event A4;
or,
after the terminal receives the CHO configuration, skipping starting, by the terminal according to an indication of the network side device, the CHO evaluation operation corresponding to the received CHO configuration.

7. The method according to any one of claims 1, 2, 3, and 5, wherein the initiating, by the terminal, the CHO-related operation further comprises:
in a case that the control information comprises at least one of first indication information, a cell bar, or fourth indication information, sending, by the terminal, CHO-related measurement, wherein
the first indication information is used for instructing at least one of: a network side device to enter an energy saving state or an energy saving mode to be entered by the network side device;
the cell bar is used for instructing a cell to prohibit at least some terminals from camping;
and
the fourth indication information is used for instructing the terminal to initiate the CHO-related measurement operation.

8. The method according to any one of claims 1, 2, 3, 5, and 7, further comprises:
in a case that the terminal does not support the energy saving mode to be entered by the network side device, initiating, by the terminal, the CHO-related operation.

9. The method according to any one of claims 1, 2, 3, 5, 7, and 8, further comprising:
in a case that the terminal supports the energy saving mode to be entered by the network side device, skipping initiating, by the terminal, the CHO-related operation; or
whether to initiate the CHO-related operation is determined by the terminal.

10. The method according to claim 3, wherein the second indication information comprises at least one of the following:
a threshold offset of a CHO execution condition;
fifth indication information, wherein the fifth indication information is used for instructing the terminal to adjust a threshold of the CHO execution condition according to a predefined threshold offset of the CHO execution condition; or
sixth indication information, wherein the sixth indication information is used for indicating the terminal to use a specific CHO execution condition.

11. The method according to claim 10, wherein the initiating, by the terminal, an operation of changing or applying a CHO configuration comprises at least one of the following:
in a case that the second indication information comprises at least one of the fifth indication information or the threshold offset of the CHO execution condition, changing, by the terminal, the threshold of the CHO execution condition according to the at least one of the fifth indication information or the threshold offset of the CHO execution condition; or
in a case that the second indication information comprises the sixth indication information, performing, by the terminal, the CHO evaluation operation by using the specific CHO execution condition.

12. The method according to claim 5 or 11, further comprising:
in a case that a candidate target cell satisfying the CHO execution condition is not found within a preset time after the terminal receives the control information, sending, by the terminal, notification information to the network side device, wherein the notification information is used for indicating that the candidate target cell satisfying the CHO execution condition is not found within the preset time.

13. The method according to claim 12, wherein an uplink resource of the notification information is preconfigured, or the uplink resource of the notification information is a cell common resource.

14. The method according to any one of claims 1 to 13, further comprising:
in a case that a radio link failure RLF occurs before the terminal receives the control information, performing, by the terminal, a first operation or a second operation, wherein
the first operation comprises initiating the CHO-related operation; and
the second operation comprises performing RRC re-establishment, and performing, in a case that a first cell selected during the RRC reestablishment is the candidate target cell in the CHO configuration of the terminal, handover based on the first cell; and sending an RRC re-establishment request on the first cell in a case that the first cell is not the candidate target cell in the CHO configuration of the terminal.

15. The method according to claim 14, wherein the performing, by the terminal, a first operation or a second operation comprises:
in a case that the network side device configures that the terminal performs the first operation when the RLF is detected, performing, by the terminal, the first operation; or,
in a case that the network side device configures that the terminal performs the second operation when the RLF is detected, performing, by the terminal, the second operation.

16. The method according to any one of claims 1 to 15, wherein the control information further comprises a cell list; and the method further comprises:
in a case that a CHO failure occurs on the terminal, selecting, by the terminal, a second cell from the cell list, and sending an RRC re-establishment request on the second cell.

17. The method according to any one of claims 1 to 16, wherein the receiving, by a terminal, control information comprises at least one of the following:
receiving, by the terminal, a system message, wherein the system message carries the control information;
receiving, by the terminal, a short message, wherein the short message carries the control information;
receiving, by the terminal, a paging message, wherein the paging message carries the control information; or
receiving, by the terminal, group common downlink control information, wherein the group common downlink control information carries the control information.

18. The method according to claim 17, wherein a paging occasion when the terminal receives the system message is configured by a network side or agreed on by a protocol.

19. The method according to claim 17 or 18, wherein the receiving, by the terminal, a system message comprises at least one of the following:
in a case that a target condition is satisfied, receiving, by the terminal, broadcast system message; or
in a case that the short message received by the terminal indicates target content, receiving, by the terminal, the broadcast system message, wherein
the target condition comprises at least one of the following:
an activated bandwidth part BWP of the terminal is configured with a common search space of the system message;
an initial bandwidth part BWP of the terminal is configured with a common search space of the system message;
the terminal is configured with monitored and broadcast system message; or
the terminal receives the CHO configuration; and
the target content comprises at least one of the following:
a system message changes;
a network energy saving-related system message changes; or
a CHO-related system message changes.

20. The method according to claim 17, wherein the receiving, by the terminal, a short message comprises:
in a case that an activated BWP or an initial BWP of the terminal is configured with a paging common search space, receiving, by the terminal, the short message.

21. The method according to claim 17 or 20, wherein the receiving, by the terminal, a short message comprises:
monitoring, by the terminal, the short message on a paging occasion configured or predefined by the network side device;
or,
monitoring, by the terminal, the short message on a time window configured or predefined by the network side device.

22. The method according to claim 17, wherein the receiving, by the terminal, a paging message comprises:
in a case that the short message received by the terminal instructs the terminal in a connected state to monitor the paging message, receiving, by the terminal, the paging message.

23. A conditional handover method, comprising:
sending, by a network side device, control information, wherein
the control information is used for triggering the terminal to initiate a conditional handover CHO-related operation;
the initiating a conditional handover CHO-related operation comprises at least one of the following:
initiating an execution operation of CHO;
initiating an operation of changing or applying a CHO configuration;
initiating a CHO evaluation operation in a case that the terminal is configured with the CHO and CHO evaluation is not started; or
initiating a CHO-related measurement operation.

24. The method according to claim 23, wherein the control information comprises at least one of the following:
first indication information, wherein the first indication information is used for instructing at least one of: the network side device to enter an energy saving state or an energy saving mode to be entered by the network side device;
a cell bar, wherein the cell bar is used for instructing a cell to prohibit at least some terminals from camping;
indication information instructing the terminal to initiate the execution operation of the CHO;
second indication information, wherein the second indication information is used for indicating related information of the CHO configuration;
third indication information, wherein the third indication information is used for instructing the terminal to perform CHO evaluation;
fourth indication information, wherein the fourth indication information is used for instructing the terminal to perform CHO-related measurement; or
time configuration information, wherein the time configuration information is used for indicating a time when the terminal performs the CHO evaluation.

25. The method according to claim 24, wherein the second indication information comprises at least one of the following:
a threshold offset of a CHO execution condition;
fifth indication information, wherein the fifth indication information is used for instructing the terminal to adjust a threshold of the CHO execution condition according to a predefined threshold offset of the CHO execution condition; or
sixth indication information, wherein the sixth indication information is used for indicating the terminal to use a specific CHO execution condition.

26. The method according to any one of claims 23 to 25, further comprising:
receiving, by the network side device, notification information, wherein the notification information is used for indicating that the terminal does not find a candidate target cell satisfying a CHO execution condition within a preset time.

27. The method according to any one of claims 23 to 26, further comprising:
configuring, by the network side device, the terminal to perform a first operation or a second operation in a case that a radio link failure RLF is detected, wherein
the first operation comprises initiating the CHO-related operation; and
the second operation comprises performing RRC re-establishment, and performing, in a case that a first cell selected during the RRC reestablishment is the candidate target cell in the CHO configuration of the terminal, handover based on the first cell; and sending an RRC re-establishment request on the first cell in a case that the first cell is not the candidate target cell in the CHO configuration of the terminal.

28. The method according to any one of claims 23 to 27, wherein the sending, by a network side device, control information comprises at least one of the following:
sending, by the network side device, a system message, wherein the system message carries the control information;
sending, by the network side device, a short message, wherein the short message carries the control information;
sending, by the network side device, a paging message, wherein the paging message carries the control information; or
sending, by the network side device, group common downlink control information, wherein the group common downlink control information carries the control information.

29. A conditional handover apparatus, comprising:
a first receiving module, configured to receive control information, wherein the control information is used for triggering a conditional handover CHO-related operation;
a first processing module, configured to initiate the CHO-related operation in response to the control information, wherein
the initiating the CHO-related operation comprises at least one of the following:
initiating an execution operation of CHO;
initiating an operation of changing or applying a CHO configuration;
initiating a CHO evaluation operation in a case that the terminal is configured with the CHO and CHO evaluation is not started; or
initiating a CHO-related measurement operation.

30. A conditional handover apparatus, comprising:
a first sending module, configured to send control information, wherein the control information is used for triggering a terminal to initiate a conditional handover CHO-related operation, where
the initiating a conditional handover CHO-related operation comprises at least one of the following:
initiating an execution operation of CHO;
initiating an operation of changing or applying a CHO configuration;
initiating a CHO evaluation operation in a case that the terminal is configured with the CHO and CHO evaluation is not started; or
initiating a CHO-related measurement operation.

31. A terminal, comprising a processor and a memory, wherein the memory stores a program or instructions executable on the processor, and the program or the instructions, when executed by the processor, implement steps of the conditional handover method according to any one of claims 1 to 22.

32. A network side device, comprising a processor and a memory, wherein the memory stores a program or instructions executable on the processor, and the program or the instructions, when executed by the processor, implement steps of the conditional handover method according to any one of claims 23 to 28.

33. A readable storage medium, having a program or instructions stored thereon, wherein the program or the instructions, when executed by a processor, implement the conditional handover method according to any one of claims 1 to 22, or implement steps of the conditional handover method according to any one of claims 23 to 28.

34. A computer program product, wherein the program product is executed by at least one processor to implement the conditional handover method according to any one of claims 1 to 22, or implement the conditional handover method according to any one of claims 23 to 28.

35. A user equipment UE, wherein the UE is configured to perform the conditional handover method according to any one of claims 1 to 22.
